# FASCICULE DE BREVET EUROPEEN

(11) **EP 3 361 602 B1**
(45) Date de publication et mention de la délivrance du brevet: **22.04.2020**
(21) Numéro de dépôt: 18020051.1
(22) Date de dépôt: 07.02.2018
(51) Int. Cl.: H02J 9/00, H02J 4/00, G06F 1/32, G06F 1/26

(54) **SOUS-ENSEMBLE ÉLECTRONIQUE AYANT UNE CONSOMMATION ÉLECTRIQUE APPARENTE NULLE EN VEILLE OU À L'ARRÊT, SYSTÈME ET PROCÉDÉ ASSOCIÉS**
ELEKTRONISCHE UNTEREINHEIT, DIE EINEN SICHTBAREN NULL-ENERGIEVERBRAUCH IM STAND-BY-BETRIEB ODER BEIM AUSSCHALTEN HAT, ENTSPRECHENDES SYSTEM UND VERFAHREN
ELECTRONIC SUBASSEMBLY HAVING ZERO APPARENT ELECTRICAL CONSUMPTION WHEN IN STANDBY OR OFF, ASSOCIATED SYSTEM AND METHOD

(30) Priorité: 09.02.2017 FR 1770126
(43) Date de publication de la demande: 15.08.2018
(73) Titulaire: Ergylink, 92300 Levallois-Perret (FR)
(72) Inventeur: Gilbert, Jérôme, 92300 Levallois-Perret (FR)

(56) Documents cités:
- FR-A1- 2 902 943
- US-A1- 2009 184 586
- US-A1- 2012 236 613
- US-A1- 2013 093 242

## Description

### Domaine technique

L'invention se situe dans le domaine des appareils électroniques grand public ou professionnels comme par exemple les téléviseurs, les ordinateurs, les appareils électroménagers, les appareils électroportatifs ou encore dans le domaine des accessoires pour de tels appareils comme par exemple les coupe-veilles universels ou spécialisés, ou encore les chargeurs pour appareils électroniques sans fil ou pour batteries.

### Etat de la technique antérieure

Des réglementations internationales, européennes et nationales ambitieuses ont permis des baisses spectaculaires des consommations en veille des appareils électroniques au cours des dernières années. Par exemple en Europe, le règlement CE No 1275/2008 permet aujourd'hui de trouver dans le commerce des équipements ménagers et de bureau électriques et électroniques dont la puissance active consommée est inférieure à 0,5 W. Les normes et les règlements en vigueur pour ces appareils n'imposent en effet des limites aux consommations en veille et à l'arrêt qu'en matière de puissance active. Alors que le problème des consommations inutiles en veille était ainsi supposé être réglé, il est surprenant d'observer que les solutions techniques qui ont été mises en œuvre par les industriels pour atteindre les très faibles consommations actives exigées par les réglementations n'ont en fait pour la plupart que déplacé les consommations dans le domaine réactif. Par exemple, un téléviseur récent qui présente une consommation en veille de 0,3 W a en fait une consommation apparente de 16 VA. Il est à noter que la consommation active en marche de cet appareil est de 40 W et que la consommation apparente atteint 77 VA. On observe des ratios similaires avec les équipements informatiques et électrodomestiques. Certes l'énergie réactive n'est pas facturée au client final mais elle doit néanmoins être produite ou compensée dans le réseau électrique. Dans un contexte général de transition énergétique encourageant la sobriété et l'efficacité énergétique ainsi que l'autoproduction, un premier nouveau problème technique se pose à la suite de ces observations surprenantes : comment réduire les consommations d'énergie réactives des appareils en veille et à l'arrêt tout en restant conforme aux réglementations en vigueur qui limitent les consommations actives inutiles.

On connait les brevets EP2719954, EP3042385, EP2584669, CN101963789, US2012/236613, US2013/093242 et US2009/184586 qui divulguent des solutions techniques moins avantageuses que celles de la présente invention. On note que les documents US 2012/236613 A1, US 2013/093242 A1 ou bien US 2009/184586 A1 décrivent chacun le préambule de la revendication indépendante 1.

### Exposé de l'invention

Le but de la présente invention est de remédier au moins partiellement aux problèmes évoqués précédemment en supprimant complètement les consommations apparentes des appareils en veille ou à l'arrêt, c'est à dire à la fois les consommations actives et les consommations réactives. L'invention vise ainsi à limiter l'impact des excès de consommation réactive des solutions techniques existantes aux seules périodes de fonctionnement des appareils.

Selon les variantes de mise en œuvre retenues, l'invention offre en outre des avantages additionnels sans surcout significatif de mise en œuvre tels que la commande de fonctions supplémentaires par le bouton de mise en marche, l'allongement de la durée de vie des contacts des relais électromécaniques par une synchronisation de leur fermeture au voisinage d'un passage à zéro de la tension alternative du réseau électrique, la possibilité de télécommander la mise en marche. L'utilisation de relais électromécaniques apporte en outre une isolation galvanique complète de l'appareil vis-à-vis du réseau électrique qui a les mêmes effets techniques, juridiques et sur le plan de la sécurité, notamment incendie, que de le débrancher physiquement ou de le déconnecter du réseau au moyen d'un véritable interrupteur. C'est avantageux en ce que cela apporte une protection efficace, peu couteuse et durable, des composants électroniques compris dans les alimentations des appareils vis-à-vis des perturbations de forte énergie qui circulent de plus en plus dans les réseau électriques du fait de l'augmentation du nombre des commutations résultant de l'augmentation de la part des énergies renouvelables dont la production est par nature très variable.

Outre le fait que son domaine d'application est plus vaste, la présente invention se combine avantageusement avec les solutions techniques divulguées dans les brevets du même inventeur publiés sous les numéros FR2902943 et FR2948831, respectivement pour des multiprises intelligentes dites coupe-veille et pour des chargeurs d'appareils électroniques mobiles.

Un premier aspect de l'invention concerne un sous-ensemble électronique.

Le sous-ensemble électronique selon l'invention, qui est à mise en marche commandée par l'utilisateur, à arrêt automatique, et qui a une consommation électrique apparente nulle à l'arrêt et en veille et dont la mise en marche ne nécessite qu'un faible courant d'amorçage comprend :
- une connexion à un réseau électrique;
- un relais de puissance comprenant au moins un interrupteur dont le premier pôle est raccordé à une phase ou à un pôle du réseau électrique, et dont le second pôle est raccordé à une entrée d'alimentation d'un sous-ensemble d'alimentation basse tension de maintien d'état en marche, et, le cas échéant, à une ou plusieurs charges externes au sous-ensemble électronique;
- un sous-ensemble de contrôle réalisé en logique câblée ou programmée pour au moins piloter l'état fonctionnel dudit relais de puissance;
- ledit sous-ensemble d'alimentation électrique basse tension de maintien d'état en marche étant agencé et dimensionné pour alimenter au moins ledit sous-ensemble de contrôle et la commande dudit relais de puissance pendant un temps indéterminé;
- un sous-ensemble d'alimentation électrique basse tension d'amorçage, qui est au moins en partie distinct du sous-ensemble d'alimentation électrique basse tension de maintien d'état en marche, et qui est agencé et dimensionné pour alimenter au moins momentanément ledit sous-ensemble de contrôle et la commande dudit relais de puissance;
- au moins un moyen pour activer momentanément ledit sous-ensemble d'alimentation électrique basse tension d'amorçage;
- au moins un moyen pour limiter le courant passant par l'au moins un moyen pour activer momentanément ledit sous-ensemble d'alimentation électrique basse tension d'amorçage;
- des moyens pour combiner des tensions et/ou des courants issus des sous-ensembles d'alimentation électrique basse tension d'amorçage et de maintien d'état en marche;
- ledit sous-ensemble de contrôle étant agencé pour fermer l'au moins un interrupteur dudit relais de puissance lors de sa mise sous tension, et pour ouvrir l'au moins un interrupteur dudit relais de puissance lors de la survenue d'un évènement dont la nature est déterminée en fonction des caractéristiques fonctionnelles de l'appareil qui comprend ledit sous-ensemble électronique et/ou, le cas échéant, selon un choix de l'utilisateur.

Décrit de manière plus détaillée, le sous-ensemble électronique selon l'invention comprend :
- une connexion à un réseau électrique. Selon le type et la puissance de l'appareil dans lequel le sous-ensemble électronique est compris, il est prévu que la connexion au réseau électrique soit réalisée au moyen d'un connecteur, c'est-à-dire le plus souvent d'une fiche électrique au standard approprié en fonction du pays et/ou de l'usage. Il est aussi prévu un raccordement par bornes dans les cas pertinents. On entend par réseau électrique tout réseau d'installation finale distribuant une tension alternative ou continue. Par exemple le réseau d'une installation monophasée classique des bâtiments ayant une tension alternative de 110 V à 230 V à une fréquence de 50 Hz ou de 60 Hz. L'invention prévoit aussi d'utiliser des réseaux électriques alternatifs triphasés ou continus, en particulier pour des mises en œuvre dans des appareils embarqués dans des moyens de transport. Par exemple une tension alternative de 115V à une fréquence variable de 380 à 800 Hz pour une utilisation dans les avions, des tensions continues par exemple de 12 à 48 V pour une utilisation dans des véhicules automobiles individuels ou collectifs, utilitaires ou de loisir ou encore dans les bateaux ou les trains.
- un relais de puissance de type électromécanique ou électronique (« Solid-State Relay ou SSR » en langue anglaise) comprenant au moins un interrupteur dont le premier pôle est raccordé à une phase ou à un pôle du réseau électrique, et dont le second pôle est raccordé à une entrée d'alimentation d'un sous-ensemble d'alimentation basse tension de maintien d'état en marche et, le cas échéant, à une ou plusieurs charges externes au sous-ensemble électronique selon l'invention, ce dernier remplissant la fonction d'interrupteur de mise en marche intelligent de la ou des charges externes. L'invention prévoit d'utiliser un relais électromécanique monostable à circuit(s) normalement ouvert(s) ou un relais bistable à une ou deux bobines. L'invention prévoit d'utiliser un relais possédant le nombre d'interrupteurs nécessaires à l'interruption de la phase seule ou de la phase et du neutre d'un réseau monophasé ou des phases d'un réseau polyphasé. Il est aussi prévu de mettre en œuvre plusieurs relais ne comprenant chacun qu'une partie du nombre d'interrupteurs requis en partageant le même signal de commande. Il est aussi prévu dans le cas de la mise en œuvre d'une pluralité de relais électromécaniques de séquencer les instants de leur commutation pour pouvoir limiter le dimensionnement du sous-ensemble d'alimentation basse tension d'amorçage au strict nécessaire pour fournir le courant d'appel à l'instant de la commutation relais par relais;
- un sous-ensemble de contrôle réalisé en logique câblée ou programmée, pour au moins piloter l'état fonctionnel dudit relais de puissance. Il est prévu que les fonctions du sous-ensemble de contrôle soient réalisées à partir de semi-conducteurs discrets et/ou intégrés analogiques et/ou numériques ou à partir d'un microcontrôleur. L'utilisation d'un microcontrôleur est avantageuse en ce qu'elle permet aisément et à moindre coût d'ajouter des fonctions supplémentaires, notamment pour matérialiser en tout ou partie les autres fonctions d'un appareil dans lequel le sous-ensemble électronique selon l'invention est compris.
- ledit sous-ensemble d'alimentation électrique basse tension de maintien d'état en marche étant agencé et dimensionné pour alimenter au moins ledit sous-ensemble de contrôle et la commande dudit relais de puissance pendant un temps indéterminé, jusqu'à la mise à l'arrêt du sous-ensemble électronique. L'autre entrée d'alimentation, ou le cas échéant les autres entrées d'alimentation, étant raccordée respectivement à l'autre phase ou pôle du réseau électrique, ou aux autres phases le cas échéant. Ces autres raccordements au réseau électrique dudit sous-ensemble d'alimentation basse tension de maintien d'état en marche étant directs ou en aval d'un autre, ou de plusieurs autres, contacts auxiliaires du ou des relais de puissance. Il est prévu que ce sous-ensemble d'alimentation soit agencé et dimensionné le cas échéant pour fournir aussi une ou plusieurs basses tension utilisées pour alimenter d'autres fonctions d'un appareil comprenant l'invention, par exemple en fournissant une tension de 5 V continu à l'intensité adéquate pour recharger un ou plusieurs appareils électroniques sans fils externes dans le cadre d'un chargeur ou pour alimenter d'autres blocs fonctionnels d'un appareil plus complexe. Ce sous-ensemble d'alimentation est agencé et dimensionné pour offrir la puissance, la durée continue de fonctionnement, la fiabilité, l'efficacité énergétique, la conformité aux standards et normes applicables et la sureté de fonctionnement requises par l'utilisation visée;
- un sous-ensemble d'alimentation électrique basse tension d'amorçage, qui est au moins en partie distinct du sous-ensemble d'alimentation électrique basse tension de maintien d'état en marche, et qui est agencé et dimensionné pour alimenter au moins momentanément ledit sous-ensemble de contrôle et la commande dudit relais de puissance. Ce sous-ensemble d'alimentation est destiné à fonctionner au moins pendant le temps nécessaire à l'amorçage de la mise en marche du sous-ensemble jusqu'à l'atteinte des conditions de maintien de l'état fonctionnel en marche ainsi que, le cas échéant, pendant l'appui de l'utilisateur sur un moyen pour activer momentanément ledit sous-ensemble d'alimentation électrique basse tension d'amorçage en phase d'état en marche maintenu. Compte tenu du temps court de fonctionnement de ce sous ensemble d'alimentation, de l'ordre de quelques secondes à quelques dizaines de secondes, il pourra avantageusement être sous-dimensionné par rapport aux règles de l'art pour une puissance donnée. Il est prévu d'ajouter des composants de protection tels qu'une résistance variable à coefficient positif (PTC en langue anglaise), un disjoncteur thermique réarmable ou un fusible thermique pour éviter tout risque d'inflammation en cas de défaillance d'un composant ou d'une utilisation anormale conduisant à une mise sous tension de ce sous-ensemble pendant une durée excessive;
- au moins un moyen pour activer momentanément ledit sous-ensemble d'alimentation électrique basse tension d'amorçage par son raccordement momentané au réseau électrique, le courant circulant dans l'au moins un moyen pour activer momentanément ledit sous-ensemble d'alimentation électrique basse tension d'amorçage étant indépendant de la puissance des charges pilotées par le relais de puissance. L'au moins un moyen d'activation de l'amorçage est par exemple un interrupteur de mise en marche du sous-ensemble électronique par fermeture momentanée du circuit alimentant ledit sous-ensemble d'alimentation électrique basse tension d'amorçage à partir de la tension du réseau électrique. Il s'agit par exemple d'un bouton poussoir bipolaire dimensionné en fonction de la tension du réseau électrique et de l'intensité appelée par le sous-ensemble d'alimentation d'amorçage. Il est prévu, que lorsque le relais de puissance est un relais électromécanique disposant d'un contact de repos et que le point commun correspondant est raccordé au réseau électrique, de connecter l'au moins un moyen d'activation de l'amorçage au réseau électrique par l'intermédiaire du contact de repos. Ainsi il est possible de limiter matériellement le temps de connexion au réseau électrique du sous-ensemble d'alimentation basse tension d'amorçage compte tenu du fait qu'en régime établi le contact de repos se retrouve isolé du réseau électrique. Bien entendu, dans ce cas, le condensateur de lissage sera dimensionné pour accumuler suffisamment d'énergie pour assurer la commutation du relais et la fourniture d'une tension d'alimentation suffisante au sous-ensemble de contrôle avant l'apport d'énergie du sous-ensemble d'alimentation basse tension de maintien d'état en marche alimenté par le contact de travail du relais. Il est aussi prévu que l'au moins un moyen pour activer momentanément ledit sous-ensemble d'alimentation électrique basse tension d'amorçage soit un moyen de contrôle électronique de l'alimentation dudit sous-ensemble, par exemple un photo-triac, un photo-thyristor, un photo-MOS, un transistor MOS, un triac ou un thyristor à sensibilité élevée. Selon les variantes de mise en œuvre, le moyen de contrôle électronique est rendu conducteur au moyen d'une tension issue du réseau électrique ou encore au moyen d'une source d'énergie autonome telle qu'une source photovoltaïque, piézoélectrique, magnétoélectrique, un supercondensateur, une batterie ou une pile. Il est aussi prévu que l'au moins un moyen pour activer momentanément ledit sous-ensemble d'alimentation électrique basse tension d'amorçage soit un moyen pour désinhiber momentanément le fonctionnement d'une alimentation à découpage à haute fréquence connectée au réseau électrique mais ne consommant pas de puissance, ou consommant une puissance pouvant être considérée comme négligeable lorsque le sous-ensemble selon l'invention est à l'arrêt ou en veille, par exemple une consommation active inférieure à 0,5 W pour répondre à la réglementation en vigueur et une consommation apparente inférieure à 0,5 VA, c'est-à-dire une puissance réactive proche de zéro. Il est prévu que ledit sous-ensemble de contrôle soit agencé pour fermer l'au moins un interrupteur dudit relais de puissance lors de sa mise sous tension, et pour ouvrir l'au moins un interrupteur dudit relais de puissance lors de la survenue d'un évènement dont la nature est déterminée en fonction des caractéristiques fonctionnelles de l'appareil qui comprend ledit sous-ensemble électronique et/ou, le cas échéant, selon un choix de l'utilisateur. Le choix de l'utilisateur est pris en compte par exemple lorsque l'invention est mise en œuvre dans le cadre d'un appareil multifonction paramétrable par l'utilisateur et/ou lorsqu'une commande manuelle d'arrêt est aussi proposée à l'utilisateur.

Il est en outre prévu que l'évènement dont la survenue provoque l'arrêt du sous-ensemble électronique soit le passage d'une quantité d'énergie, d'une puissance, d'un courant, ou d'une tension en dessous d'un seuil prédéterminé, le cas échéant pendant un temps prédéterminé, par exemple dans le cas d'un coupe-veille ou d'un chargeur à arrêt automatique, et/ou le passage d'une quantité d'énergie, d'une puissance, d'un courant, d'une tension ou d'une autre grandeur physique, par exemple une masse, une vitesse de rotation ou une température, au-dessus d'un seuil prédéterminé par exemple dans le cas d'une fonction d'autoprotection d'un appareil contre toute surcharge ou condition anormale susceptible de créer un risque pour l'appareil, pour son environnement ou pour des personnes, le cas échéant pendant un temps prédéterminé, et/ou l'atteinte d'une quantité prédéterminée d'unités consommées par exemple dans le cas de services prépayés, et/ou la fin d'un cycle fonctionnel par exemple dans le cas d'un appareil électroménager, et/ou l'arrivée à échéance d'une temporisation, et/ou une information ou une absence d'information issue d'un capteur, par exemple une information d'absence obtenue à partir d'un détecteur de présence humaine ou d'un détecteur de présence d'un appareil ou d'un pack à recharger dans un chargeur ou sur support de recharge et de sa gestion, un détecteur de fuite de courant à la terre, de fuite d'eau ou de fuite ou de dégagement de gaz, et/ou la fermeture ou l'ouverture d'un contact de sécurité, et/ou une commande manuelle d'arrêt de l'utilisateur. Il s'agit par exemple d'un bouton poussoir dédié ou partagé avec une autre fonction et de sa gestion ou encore d'un récepteur de télécommande compris dans le sous-ensemble selon l'invention, et/ou la réception par ledit sous-ensemble de contrôle d'un signal d'arrêt transmis par des moyens externes au sous-ensemble électronique selon l'invention, un tel signal d'arrêt est par exemple le passage à +5 V du signal d'entrée « PS-ON » de l'alimentation d'un ordinateur fixe qui est piloté par le BIOS et le système d'exploitation pour passer en veille. Dans le cas d'un téléviseur, le signal d'arrêt est par exemple le signal interne qui résulte de la réception d'une commande ou d'une télécommande de mise en veille.

Il est en outre prévu que ledit sous-ensemble de contrôle soit agencé pour fermer l'au moins un interrupteur dudit relais de puissance lors de sa mise sous tension, sous condition de passage au-dessus d'un seuil prédéterminé de la tension de commande du relais et/ou que la fermeture effective de l'au moins un interrupteur dudit relais de puissance se fasse au voisinage d'un passage à zéro de la tension alternative du réseau électrique. Il est en effet avantageux, en particulier dans le cas des relais électromécaniques, qu'une tension suffisante soit fournie à la bobine à l'instant de la commutation pour obtenir une action mécanique et une commutation électrique franche propice à une absence de collage des contacts. Il est ainsi prévu que le sous-ensemble de contrôle mesure la tension d'alimentation de la bobine du relais, par exemple au moyen d'un convertisseur analogique/numérique intégré dans un microcontrôleur et d'un pont diviseur ramenant la tension à mesurer sans la plage de fonctionnement du convertisseur. Le sous-ensemble de contrôle, à sa mise sous tension, mesure la tension d'alimentation de la bobine et la compare à un seuil prédéterminé pour autoriser la commutation que lorsque la tension mesurée est supérieure ou égale au seuil.

Il est en outre prévu que lesdits sous-ensembles d'alimentation électrique basse tension de maintien d'état en marche et d'amorçage ont chacun au moins un composant électronique en commun avec l'autre et chacun au moins un composant électronique qui lui est spécifique.

Il est en outre prévu que ledit sous-ensemble d'alimentation électrique basse tension de maintien d'état en marche soit une alimentation capacitive utilisant un condensateur comme moyen pour abaisser la tension du réseau électrique, ou une alimentation utilisant un transformateur fonctionnant à la fréquence du réseau électrique pour abaisser la tension du réseau, ou une alimentation à découpage à haute fréquence.

Il est en outre prévu que ledit sous-ensemble d'alimentation électrique basse tension d'amorçage fournisse audit sous-ensemble de contrôle un signal ayant au moins une transition en phase avec une alternance de la tension alternative du réseau électrique pour synchroniser la fermeture de l'au moins un interrupteur dudit relais de puissance avec le voisinage d'un passage à zéro de la tension alternative du réseau électrique. Il est en effet avantageux pour la durabilité des contacts d'un relais électromécanique, outre le fait de mettre sous tension une charge à l'état de veille pour limiter l'appel de courant, que l'instant de la commutation effective des contacts du relais se fasse alors que la tension alternative du réseau électrique est de faible amplitude c'est-à dire dans le voisinage d'un de ses passages à zéro. La notion de voisinage de l'instant du passage à zéro vient de la relative imprécision avec laquelle il est possible de maîtriser l'instant de la commutation effective d'un relais électromécanique. Les constructeurs spécifient généralement un retard compris entre 8 et 10 ms compté à partir de l'application de la tension de commande sur la bobine du relais. L'invention prévoit plusieurs variantes de mise en œuvre plus ou moins sophistiquées en fonction de la précision souhaitée pour la synchronisation de la commutation avec le passage à zéro de la tension. La plus simple est de synchroniser l'application de la tension sur la bobine du relais avec un passage à zéro de la tension du réseau, le contact devant effectif entre 8 et 10 ms plus tard, on se retrouve au voisinage d'un nouveau passage à zéro de la tension, tant dans le cas d'un réseau électrique à 50 Hz qu'à 60 Hz. Dans une variante plus sophistiquée, on n'applique la tension à la bobine du relais que lorsqu'une tension prédéterminée est atteinte pour resserrer la dispersion du temps de commutation autour d'une valeur nominale connue par avance en fonction du modèle de relais mis en œuvre, le cas échant, on ajoute une temporisation comptée à partir de l'instant du passage à zéro de la tension avant d'appliquer la tension de commande au relais pour que le contact effectif se trouve au plus prés d'un passage à zéro suivant. Dans une variante encore plus sophistiquée, on ajoute une étape préalable de mesure du temps de commutation effectif du relais d'un sous-ensemble selon l'invention donné, et une étape de mémorisation de la variable pertinente, pour ajuster encore plus précisément l'instant d'application de la tension de la bobine pour que le contact effectif coïncide encore plus exactement avec le passage à zéro de la tension du réseau électrique pour chaque sous-ensemble. Il est à noter que dans le cas de la mise en œuvre d'un relais électronique, la synchronisation précise de la fermeture du circuit avec le passage à zéro de la tension du réseau et son ouverture au passage à zéro du courant dans la charge est plus simple à mettre en œuvre que dans le case des relais électromécaniques, ces caractéristiques techniques sont proposées en standard dans la plupart des versions intégrées de « SSR ».

Il est en outre prévu que ledit sous-ensemble d'alimentation électrique basse tension d'amorçage soit une alimentation résistive utilisant une résistance de puissance comme moyen pour abaisser la tension du réseau électrique, ou une alimentation à découpage à haute fréquence. Le choix d'une alimentation résistive offre un bon compromis coût, encombrement fiabilité permet de simplifier la mise en œuvre de raffinements de l'invention. Par exemple, du fait de l'absence de déphasage d'une impédance purement résistive aux basses fréquences des réseaux électriques, un même circuit d'entrée connecté à au moins une broche du microcontrôleur peut alors être utilisé pour tester si la tension de commande du relais atteint un seuil prédéterminé, pour acquérir une information de synchronisation avec la tension alternative du réseau électrique et, le cas échéant, pour détecter tout nouvel appui sur le bouton de mise en marche en régime établi après l'étape de mise en marche du sous-ensemble électronique selon l'invention. Le choix d'une alimentation à découpage est intéressant par exemple pour réduire l'encombrement du sous-ensemble par la mise en commun de ce bloc fonctionnel entre les deux sous-ensembles d'alimentation électrique basse tension d'amorçage et de maintien d'état en marche.

Il est en outre prévu que des tensions et/ou des courants issus des sous-ensembles d'alimentation électrique basse tension d'amorçage et de maintien d'état en marche soient combinés pour alimenter ledit sous-ensemble de contrôle et la commande dudit relais lorsque seul l'un des deux sous-ensembles d'alimentation électrique basse tension est alimenté par le réseau électrique et lorsque les deux sous-ensembles d'alimentation électrique basse tension sont alimentés simultanément par le réseau électrique. Ceci pour assurer la continuité de l'alimentation des ressources internes du sous-ensemble selon l'invention depuis la phase d'amorçage jusqu'au verrouillage de l'état en marche. Avantageusement, la combinaison des tensions et/ou des courants issus des deux sous-ensembles d'alimentation basse tension permet la mise en commun de certains composants positionnés en aval dans certaines topologies de circuits d'alimentation. Lorsque des factorisations de composants sont impossibles du fait de topologies d'alimentations incompatibles entre elles, la combinaison des tensions et/ou des courants peut aisément être réalisée au moyen d'une ou de deux diodes selon les variantes des sous-ensembles d'alimentation mises en œuvre.

Il est en outre prévu, que le sous-ensemble d'alimentation électrique basse tension d'amorçage fournisse au sous-ensemble de contrôle un signal pour permettre la détection de l'activation et/ou de la non activation de l'au moins un moyen pour activer momentanément ledit sous-ensemble d'alimentation électrique basse tension d'amorçage, lorsque le sous-ensemble d'alimentation électrique basse tension de maintien d'état en marche est alimenté par le réseau électrique. Par exemple l'activation est aisément détectable par les moyens logiques de contrôle par le biais d'un pont diviseur approprié pour détecter l'application de la tension du réseau électrique. L'activation est aussi détectable en exploitant une différence d'amplitude après combinaison des tensions et/ou des courants basses tensions ou en ce que les deux basses tensions redressées avant lissage présentent une différence de fréquence ou de phase, entre elles, ou relativement à la fréquence de la tension du réseau électrique.

Il est en outre prévu que le sous-ensemble électronique selon l'invention comprenne des moyens pour recevoir des signaux de télécommande dont la réception provoque l'activation momentanée d'au moins un moyen pour activer momentanément ledit sous-ensemble d'alimentation électrique basse tension d'amorçage du sous-ensemble électronique, lesdits moyens pour recevoir des signaux de télécommande ayant une consommation électrique nulle sur le réseau électrique lorsque ledit sous-ensemble d'alimentation électrique basse tension de maintien d'état en marche n'est pas alimenté par le réseau électrique. Il est aussi prévu que les moyens pour recevoir des signaux de télécommande comprennent des moyens de stockage d'énergie électrique tels qu'un supercondensateur ou une batterie, et le cas échéant, une source d'énergie alternative au réseau électrique telle que des cellules photovoltaïques, pour recharger au moins en partie lesdits moyens de stockage d'énergie électrique. Il s'agit par exemple de moyens pour recevoir des signaux infrarouges émis par un boitier de télécommande d'un appareil audio ou audiovisuel. On utilise avantageusement comme signal de mise en marche non pas le signal de télécommande décodé mais le signal à la fréquence porteuse, par exemple une fréquence comprise par exemple entre 30 et 40 KHz. Ceci pour pouvoir mettre en marche le sous-ensemble électronique selon l'invention quel que soit le standard de communication infrarouge utilisé. Un moyen pour inhiber le fonctionnement ou l'effet du fonctionnement des moyens de réception est avantageusement ajouté pour rendre le sous-ensemble électronique insensible à des signaux considérés comme parasites tels que des signaux IrDA émis par un ordinateur portable. Les moyens d'inhibition prévus sont électriques, programmatiques ou mécaniques tels qu'un obturateur du capteur infrarouge. Bien entendu, on ne sort pas du cadre de l'invention si les moyens pour recevoir des signaux de télécommande ne reposent pas sur des signaux infrarouges mais sur la voix humaine, d'autres sons audibles, des ultrasons, des signaux lumineux à d'autres longueurs d'onde que les infrarouges ou encore sur des signaux radioélectriques rayonnés, guidés ou conduits.

Il est en outre prévu qu'un élément visuel signale à l'utilisateur que la fonction de mise en marche du sous-ensemble électronique par télécommande est utilisable. Il s'agit par exemple d'une led à très basse consommation qui clignote à une fréquence lente pour signaler la disponibilité de la télécommande, ou d'un afficheur bistable passif donnant une indication visible à distance des deux états possibles et ne consommant que lors d'un changement d'état, par exemple un afficheur à cristaux liquides bistable ou un afficheur à « encre électronique ». Il s'agit de signaler à l'utilisateur de manière visible à une distance représentative de la distance d'utilisation d'une télécommande, que les moyens de stockage électrique contiennent suffisamment d'énergie pour permettre au sous-ensemble de réception de mettre en marche le sous-ensemble selon l'invention. Si ce n'est plus les cas, l'utilisateur sait alors qu'il doit se rapprocher de l'appareil pour mettre en marche le sous-ensemble électronique par au moins un moyen d'activation de l'amorçage manuel qui est toujours fonctionnel.

Il est en outre prévu que le sous-ensemble électronique selon l'invention comprenne en outre des moyens pour être mis en marche automatiquement et/ou pour être mis à l'arrêt manuellement. Par exemple, un second moyen d'activation de l'amorçage tel qu'un relais dont la fermeture des contacts est pilotée par un automatisme externe et/ou une commande manuelle au moyen d'un bouton d'arrêt spécifique, par l'intermédiaire d'un signal d'arrêt externe au sous-ensemble selon l'invention ou par une utilisation alternative de l'au moins un moyen d'activation de l'amorçage pour forcer l'arrêt lorsque le sous-ensemble selon l'invention est en marche. Il s'agit par exemple de l'interprétation d'un nouvel appui lorsque le sous-ensemble selon l'invention est en régime établi de maintien en marche, ou avantageusement, de l'interprétation d'un appui continu pendant un temps long prédéterminé pour éviter toute commande de mise à l'arrêt involontaire.

Un second aspect de l'invention concerne un système formant un appareil électronique grand public ou professionnel dont la consommation électrique apparente à l'arrêt ou en veille est nulle, caractérisé en ce qu'il comprend un sous-ensemble électronique à mise en marche commandée par l'utilisateur et à arrêt automatique ayant une consommation électrique apparente nulle à l'arrêt et en veille selon le premier aspect de l'invention, et des moyens matériels et/ou logiciels additionnels pour mettre en œuvre au moins une fonction caractéristique d'un appareil électronique grand public ou professionnel.

L'invention prévoit en outre que ledit appareil électronique grand public ou professionnel est un coupe-veille universel, ou un coupe-veille optimisé pour éliminer la consommation en veille d'appareils audiovisuels ou d'appareils informatiques ou de chargeurs standards, ou un chargeur universel, ou un chargeur optimisé pour la recharge d'un ou de plusieurs appareils comprenant une batterie ou pour la recharge de pack ou de batteries amovibles, ou un appareil audiovisuel tel qu'un téléviseur, un projecteur vidéo 2D ou 3D, ou un appareil de restitution sonore tel qu'un un système de restitution audio de type « chaine HI-FI », « en réseau » ou « home-cinéma » ou un récepteur de contenus de type « radiophonique » diffusés par voie hertzienne ou par Internet, ou un ordinateur, ou un sous-ensemble d'alimentation pour ordinateur de bureau ou pour ordinateur portable, ou un appareil électroménager tel qu'un lave-linge, un sèche-linge, un lave-vaisselle, un fer ou une centrale à repasser, ou une machine, ou un outil électroportatif.

On entend par moyens matériels et/ou logiciels additionnels pour mettre en œuvre au moins une fonction caractéristique d'un appareil électronique grand public ou professionnel par exemple dans le cas d'un appareil de type coupe-veille universel, une fiche mâle pour le raccordement au réseau électrique du système ainsi formé, au moins une embase femelle dont la connexion au réseau électrique est assurée par la fermeture de l'au moins un interrupteur du relais de puissance du sous-ensemble suite à l'activation du sous-ensemble d'alimentation d'amorçage selon l'invention, l'au moins une embase femelle étant agencée pour y connecter la fiche du cordon d'alimentation d'un appareil audiovisuel ou informatique externe au système, des moyens de mesure donnant une information représentative de la puissance ou du courant consommé par l'au moins un appareil audiovisuel ou informatique, des moyens de comparaison de cette information avec un seuil prédéterminé, des moyens de prise de décision pour générer ledit évènement et ainsi ouvrir l'au moins un interrupteur du relais de puissance du sous-ensemble selon l'invention quand la puissance consommée par l'au moins un appareil audiovisuel ou informatique est inférieure à un seuil prédéterminé pendant un temps prédéterminé. La personne du métier saura identifier les moyens matériels et/ou logiciels additionnels à ceux du sous-ensemble selon l'invention pour mettre en œuvre au moins une fonction caractéristique de tout autre appareil électronique grand public ou professionnel.

Un troisième aspect de l'invention concerne un procédé mis en œuvre dans un sous-ensemble électronique à mise en marche commandée par l'utilisateur et à arrêt automatique ayant une consommation électrique apparente nulle à l'arrêt et en veille.

Le procédé selon l'invention est caractérisé en ce qu'il comprend :
- une étape d'amorçage de la mise en marche par activation d'un sous-ensemble d'alimentation électrique basse tension d'amorçage pour alimenter un sous-ensemble de contrôle et la commande d'un relais de puissance qu'il pilote pendant au moins le temps nécessaire au verrouillage de l'état en marche;
- une étape de verrouillage de l'état en marche pour maintenir l'état fonctionnel en marche pendant un temps indéterminé, l'étape de verrouillage étant autoentretenue en ce qu'un sous-ensemble d'alimentation électrique basse tension de maintien d'état en marche alimente ledit sous-ensemble de contrôle et la commande dudit relais de puissance qu'il pilote pendant un temps indéterminé jusqu'à la survenue d'un évènement qui provoque l'arrêt dudit sous-ensemble électronique;
- une étape de mise à l'arrêt supprimant toute consommation électrique apparente dudit sous-ensemble électronique, et le cas échéant toute consommation apparente des charges externes dont il contrôle l'alimentation, lorsque survient un évènement dont la nature est déterminée en fonction des caractéristiques fonctionnelles de l'appareil qui comprend ledit sous-ensemble électronique et/ou, le cas échéant, selon un choix de l'utilisateur.

Il est en outre prévu que le procédé selon l'invention comprenne une étape de fermeture de l'au moins un interrupteur dudit relais de puissance sous condition de passage au-dessus d'un seuil prédéterminé de la tension de commande du relais et/ou que la fermeture effective de l'au moins un interrupteur dudit relais de puissance se fasse au voisinage d'un passage à zéro de la tension alternative du réseau électrique.

Il est en outre prévu que le procédé selon l'invention comprenne au moins une étape de détection de l'activation et/ou de la non activation de l'au moins un moyen pour activer momentanément ledit sous-ensemble d'alimentation électrique basse tension d'amorçage lorsque le sous-ensemble d'alimentation électrique basse tension de maintien d'état en marche est alimenté par le réseau électrique.

Il est en outre prévu que le procédé selon l'invention comprenne une étape de recharge de moyens de stockage d'énergie destinés à l'alimentation de moyens pour recevoir des signaux de télécommande lorsque le sous-ensemble d'alimentation électrique basse tension de maintien d'état en marche est alimenté par le réseau électrique.

Utilisation du procédé selon l'invention pour supprimer les consommations électriques active et réactive en veille ou à l'arrêt d'un appareil audiovisuel ou audio, ou d'un appareil ou composant informatique, ou d'un appareil électroménager, ou d'un appareil coupe-veille, ou d'un appareil chargeur d'appareil sans fil ou de batterie, ou d'une machine, ou d'un outil électroportatif.

### Brève description des dessins

D'autres avantages et caractéristiques de l'invention apparaîtront à l'examen de la description détaillée de modes de mise en œuvre nullement limitatifs, et des dessins annexés où :
- La figure 1: illustre la structure interne d'un coupe-veille ou d'un chargeur.
- La figure 2: illustre la structure interne de la solution selon l'invention.
- La figure 3: illustre une première variante de la solution selon l'invention.
- La figure 4: illustre une seconde variante de la solution selon l'invention.
- La figure 5: illustre une troisième variante de la solution selon l'invention.
- La figure 6: illustre des courbes caractéristiques lors de la mise en marche.
- La figure 7: illustre des courbes caractéristiques en régime établi.
- La figure 8: illustre une quatrième variante de la solution selon l'invention.
- La figure 9: illustre une cinquième variante de la solution selon l'invention.
- La figure 10: illustre la mise en œuvre du procédé selon l'invention.
- La figure 11: illustre la mise en œuvre de raffinements du procédé.

### Description détaillée des figures et des modes de réalisation

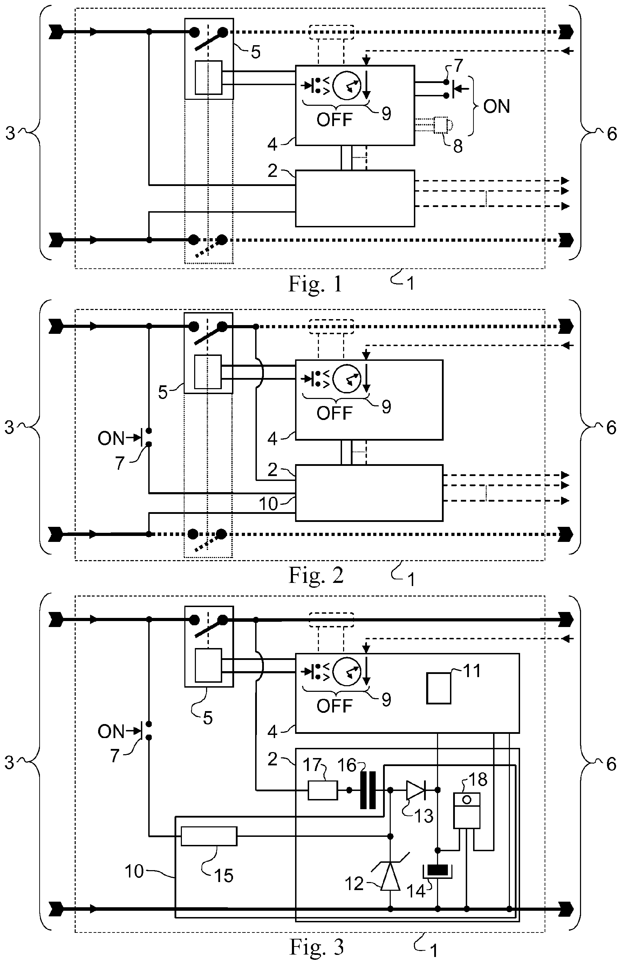

La **figure 1** illustre la structure interne d'un dispositif à l'état de l'art de type coupe-veille ou chargeur d'appareils rechargeables à arrêt automatique comme par exemple décrit dans les brevets FR2902943 et FR2948831.

L'illustration représente un sous-ensemble 1 ayant un périmètre structurel et fonctionnel comparable à celui du sous-ensemble 1 selon l'invention.

Le sous-ensemble 1 comprend un sous-ensemble d'alimentation 2 qui est toujours raccordé au réseau électrique 3 pour alimenter un sous-ensemble de contrôle 4 qui pilote un relais de puissance 5. Le relais de puissance 5 commande en outre l'alimentation d'au moins une charge 6 qui est externe au périmètre d'intérêt de l'invention. Il s'agit selon le type d'appareil comprenant le sous-ensemble 1, d'une charge externe alimentée directement par le relais de puissance 5 à la tension du réseau électrique ou d'une charge externe alimentée par une ou plusieurs sorties du sous ensemble d'alimentation basse tension 2. La mise en marche du sous-ensemble 1, et par conséquent de l'au moins une charge 6, se fait par un appui sur un bouton spécifique de mise en marche 7 ou, le cas échéant, par réception d'un signal de télécommande au moyen d'un récepteur 8. La mise à l'arrêt du sous-ensemble 1, et par conséquent de l'au moins une charge 6, se fait lorsque survient un évènement 9. Un tel sous-ensemble 1 présente toujours une consommation électrique résiduelle, même à l'arrêt des charges commandées 6. Selon le type de sous-ensemble d'alimentation basse tension 2 qu'ils comprennent, les sous-ensembles 1 connus sont caractérisés par une consommation d'énergie inutile à l'arrêt qui peut être non négligeable. Cette consommation résiduelle à l'arrêt peut atteindre par exemple 2,2 W et 2,8 VA pour un coupe-veille dont l'alimentation basse tension repose sur un transformateur abaisseur fonctionnant à la fréquence du réseau électrique, soit sensiblement la même consommation apparente que lorsque ce sous-ensemble 1 est en marche. La situation est paradoxale en ce que la consommation apparente « en veille » d'un coupe-veille ou d'un chargeur à arrêt automatique à l'état de l'art peut être supérieure à la consommation en veille d'un appareil électronique récent qu'elle permet d'éviter. Pour les appareils dont le sous-ensemble d'alimentation 2 comprend un condensateur abaisseur de tension, il est possible d'obtenir une consommation apparente active à l'arrêt inférieure à 0,5 W mais, compte tenu du déphasage introduit par le condensateur, la consommation apparente correspondante peut atteindre par exemple 8,5 VA.

La **figure 2** illustre la structure interne de la solution selon l'invention.

La solution selon l'invention repose sur un sous-ensemble 1 comprenant un sous-ensemble d'alimentation basse tension d'amorçage 10 qui est au moins en partie distinct du sous-ensemble d'alimentation basse tension de maintien de l'état en marche 2, et sur une mise en marche reposant sur le raccordement momentané au réseau électrique du sous-ensemble d'alimentation basse tension d'amorçage 10. L'amorçage ne nécessitant que l'alimentation du sous-ensemble de contrôle 4 et du relais de puissance 3, le courant d'appel du sous-ensemble d'alimentation basse tension d'amorçage 10 sur le réseau électrique 3 est faible. Ceci quelle que soit la puissance des charges 6 pilotées par le relais de puissance 5. Les avantages qui en résultent par rapport aux solutions connues en cas de commande déportée sont par exemple une réduction des coûts de mise en œuvre, un plus esthétique lié à l'utilisation d'un câble souple de faible diamètre et l'absence de génération de perturbation électromagnétique dû à l'appel de courant des charges 6 susceptible de perturber le fonctionnement d'appareils environnants. Il est ainsi possible d'utiliser comme au moins un moyen 7 d'activation, un interrupteur de mise en marche de type bouton poussoir à contact normalement ouvert à la fois compact et économique. Il est aussi possible de déporter l'au moins un interrupteur de mise en marche 7 de la partie principale du sous-ensemble 1 au moyen d'un câble de faible diamètre comprenant des fils de cuivre souple d'aussi faible section que par exemple 0,25 mm² ou 0,5 mm² et dont l'isolation est en rapport avec la tension du réseau électrique 3 utilisé. Le sous-ensemble de contrôle 4 selon l'invention comprend des semi-conducteurs discrets tels qu'au moins une diode ou un transistor et/ou intégrés, analogiques ou numériques, par exemple au moins un amplificateur opérationnel ou une porte logique ou encore un microcontrôleur. L'utilisation d'un microcontrôleur permet de mettre en œuvre des raffinements de l'invention, notamment pour prolonger la durée de vie du relais 3 et pour réduire les perturbations conduites et rayonnées lors des commutations. Le microcontrôleur permet en outre de gérer avec pas ou peu de moyens matériels additionnels un ou plusieurs événements 9 conduisant à l'arrêt automatique du sous-ensemble 1.

La **figure 3** illustre une première variante de la solution selon l'invention. Cette première variante de l'invention, dont le sous-ensemble de contrôle 4 comprend un microcontrôleur 11, illustre une combinaison avantageuse desdits sous-ensembles d'alimentation basse tension d'amorçage 10 et de maintien d'état en marche 2 qui sont agencés pour combiner leurs apports de courant aux bornes de la diode Zener 12 lorsque les contacts de l'interrupteur de mise en marche sont fermés. Les deux sous-ensembles d'alimentation basse tension 2 et 10 comprennent des composants électroniques communs comme par exemple dans le cas d'un redressement mono alternance, une diode Zener 12 au moins une diode de redressement 13, un condensateur de lissage 14 et une régulation secondaire 18 éventuelle pour l'alimentation des composants à très basse tension du sous-ensemble de contrôle. Le sous-ensemble d'alimentation basse tension d'amorçage 10 comprend un composant qui lui est spécifique, la résistance de puissance 15. Le sous-ensemble d'alimentation basse tension de maintien de l'état en marche 2 comprend plusieurs composants qui lui sont spécifiques, un condensateur abaisseur de tension 16 et une résistance 17 de limitation du courant d'appel.

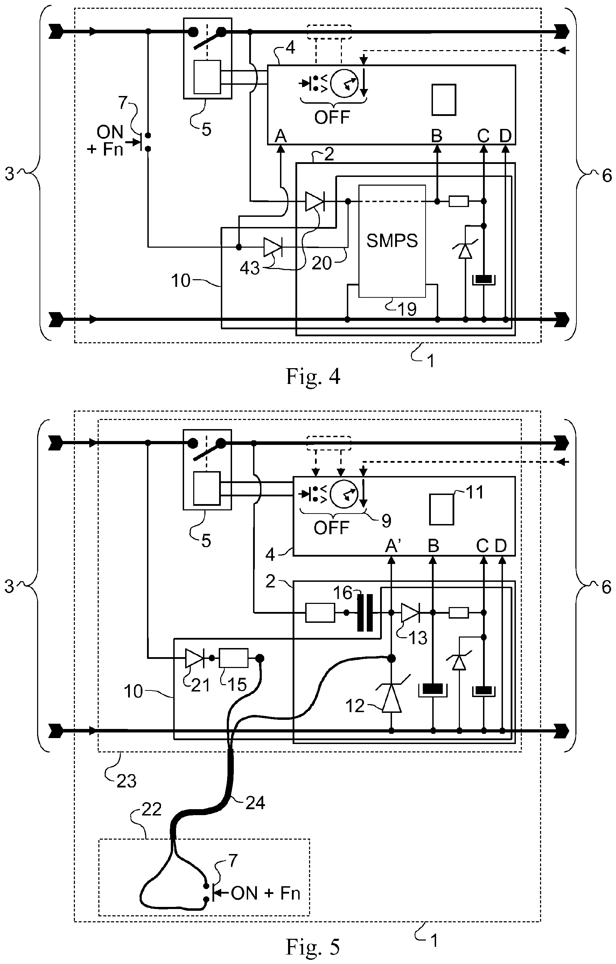

La **figure 4** illustre une seconde variante de la solution selon l'invention.

Cette variante se distingue de la précédente en ce que les sous-ensembles d'alimentation basse tension 2 et 10 ont en commun une alimentation à découpage à haute fréquence 19. Selon le besoin ou pas d'une isolation galvanique entre l'entrée et la sortie, la nécessité de conserver ou pas un potentiel commun aux hautes et basses tensions tel que le neutre d'un réseau alternatif ou la masse d'un réseau continu, l'alimentation à découpage comprendra en amont un redressement mono ou double alternance. Toutes les structures connues d'alimentation à découpage telles que « Buck », Flyback » etc. sont utilisables. Il est à noter que dans le cas d'un réseau électrique 3 en courant continu à basse tension, l'alimentation à découpage peut ne pas être nécessaire, le bloc fonctionnel correspondant devient alors une simple liaison entre l'entrée et la sortie comme illustré en pointillés. Dans cet exemple de mise en œuvre, deux diodes 43 font fonction à la fois de redressement mono alternance dans le cas d'un réseau alternatif, de blocage de la circulation d'un courant passant par l'interrupteur 7 vers les charges 6 lors de sa fermeture, et de combinaison des sources d'alimentation au point 20 à l'entrée haute tension de l'alimentation à découpage pour assurer la continuité d'alimentation basse tension du sous-ensemble 4 pendant les étapes d'amorçage et de verrouillage de l'état en marche. Le signal référencé « A » permet la détection par le sous-ensemble de contrôle 4 de la fermeture et de l'ouverture de l'interrupteur 7 pour offrir des fonctions additionnelles et, le cas échéant, la synchronisation de la fermeture des contacts du relais 5 avec le voisinage d'un passage à zéro de la tension alternative du réseau électrique 3. Le signal « B » permet l'alimentation de la commande du relais 5 et, le cas échéant, le conditionnement de la commande du relais 5 à un critère pertinent sur la valeur de cette tension. Le signal « C » permet la fourniture au sous-ensemble 4 d'une tension inférieure à celle du signal « B ». Le signal « D » est le point commun des tensions entre les sous-ensembles 2, 4 et 10.

La **figure 5** illustre une troisième variante de la solution selon l'invention. Cette variante se distingue des précédentes en ce que la résistance de puissance 15 et rendue moins encombrante et moins coûteuse, à courant utile fourni égal, grâce à la présence de la diode 21 qui bloque le passage du courant pour l'alternance inutilisée dans cet exemple. Cette variante se distingue aussi en ce que l'au moins un interrupteur de mise en marche 7 est déporté dans un boitier 22 de la partie principale 23 du sous-ensemble 1 au moyen d'un câble 24. Le déport de l'interrupteur 7 est avantageux dans le cas où le sous-ensemble 1 est compris dans un appareil pilotant des charges externes 6 et comprenant pour cela des prises de courant avec des fiches et des câbles peu esthétiques branchés dessus ayant avantage à rester au sol et cachés. L'interface entre les sous-ensembles d'alimentation basse tension 2, 10 et le sous-ensemble de contrôle 4 comprend quatre liaisons électriques A', B, C, D ayant les mêmes fonctions que dans la variante de la figure 4. Dans le cas d'un relais 5 électronique à entrée optocouplée, les tensions B et C peuvent être confondues et la circuiterie commune aux sous-ensembles 2 et 10 simplifiée. La tension au point A' est particulièrement intéressante à exploiter car elle contient des informations permettant de détecter des appuis sur le bouton 7 après l'étape d'amorçage pour offrir des fonctions additionnelles, par exemple une commande manuelle d'arrêt ou de mise en marche forcée indépendamment de tout évènement 9. La tension au point A' comprend aussi des informations pour déterminer l'instant optimal de commande de la fermeture des contacts du relais 5.

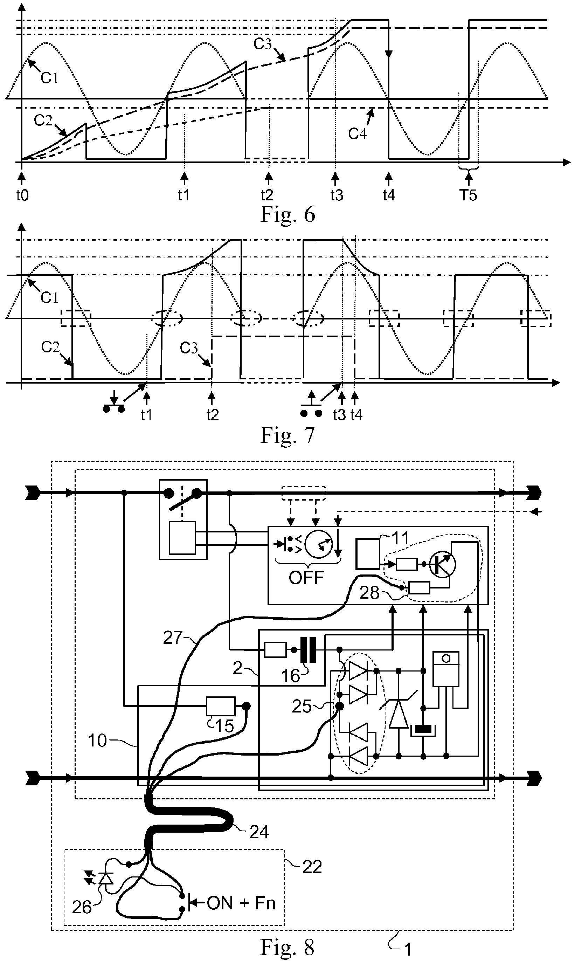

La **figure 6** illustre des courbes caractéristiques lors de la mise en marche.

La figure 6 illustre l'évolution dans le temps de plusieurs tensions observées à des points caractéristiques de la figure 5, ceci à partir de l'instant de la première fermeture du contact de l'interrupteur de mise en marche 7.

La courbe C1 représente l'évolution dans le temps de la tension du réseau électrique 3 dans le cas d'une tension alternative. La courbe C2 représente l'évolution dans le temps de la tension au point A', il s'agit de la tension prévue pour la détection des conditions de commande de la fermeture des contacts du relais 5 et des appuis sur l'au moins un interrupteur 7. La courbe C3 représente l'évolution dans le temps de la tension au point B, il s'agit de la tension prévue pour l'alimentation de l'au moins une bobine d'un relais électromécanique 5. La courbe C4 représente l'évolution dans le temps de la tension au point C, il s'agit de la tension prévue pour l'alimentation du microcontrôleur 11. Ces tensions étant mesurées relativement à la référence 0 V du point D.

On observe qu'à partir de la première fermeture des contacts de l'au moins un interrupteur 7, l'amplitude de la tension au point B augmente continument jusqu'à atteindre un seuil prédéterminé à l'instant t3. C'est une première condition intéressante pour déterminer l'instant de la commutation d'un relais électromécanique en ce qu'une commutation de qualité doit se faire avec une bonne dynamique de l'équipement mobile du relais qui suppose la disponibilité d'une quantité d'énergie suffisante pour sa commande. En outre, la maîtrise de la tension d'alimentation de la bobine a pour effet de resserrer la dispersion du temps de commutation et de le raccourcir. Ceci pour permettre de gérer plus précisément l'instant de la commande du relais pour rapprocher l'instant de la fermeture des contacts du passage effectif au zéro de la tension du réseau électrique. L'instant t1 correspond au seuil de tension d'alimentation à partir duquel le microcontrôleur 11 s'initialise et démarre l'exécution de son programme. L'instant t2 correspond à l'atteinte de la tension d'alimentation nominale de fonctionnement du microcontrôleur 11.

La tension au point A' de la courbe C2 est particulièrement remarquable en ce que ses maximums suivent de manière homothétique la tension au point B de la courbe C3, en étant légèrement supérieurs à cette dernière de la chute de tension directe de la diode 13, et en ce que les fronts du signal sont synchronisés avec les passages à zéro de la tension alternative du réseau électrique 3. Les fronts sont exactement synchrones avec les passages à zéro lorsque le sous-ensemble d'alimentation basse tension d'amorçage 10 n'introduit aucun déphasage, c'est-à-dire lorsque le composant qui provoque la chute de tension est de nature purement résistive.

A l'instant t4, deux conditions sont réunies pour appliquer la tension de commande au relais 5, elle est supérieure au seuil prédéterminé depuis l'instant t3 et on arrive à un passage à zéro de la tension du réseau électrique 3. Compte tenu du temps de commutation spécifique au relais mis en œuvre mais qui pour un relais électromécanique est généralement compris entre 8 et 10 ms, le contact effectif se produit dans la plage de temps T5 qui correspond au voisinage du passage à zéro de la tension du réseau électrique c'est-à-dire à une tension au moment du contact qui est comprise dans un intervalle de plus ou moins quelques dizaines de volts. L'invention prévoit des raffinements pour rendre plus précis et davantage reproductible la proximité de l'instant de l'établissement du contact avec le passage à zéro. Par exemple en ajoutant une temporisation à compter de la survenue de l'événement de synchronisation relativement à la tension du réseau électrique pour rapprocher l'instant du contact effectif du passage à zéro de la tension. La durée de la temporisation est prédéterminée à la conception du sous-ensemble 1 lorsqu'existe un décalage temporel connu et reproductible entre le passage à zéro effectif de la tension du réseau électrique et le signal qui est utilisé pour le détecter et/ou que le temps de commutation du relais est connu et reproductible. Lorsqu'une composante de la chaine temporelle affectant la synchronisation et/ou la commutation est inconnue ou trop variable dans une production industrielle, une étape d'étalonnage automatique est prévue, ainsi que la mémorisation du paramètre unique qui en découle. Une prise d'information complémentaire est prévue pour détecter l'établissement du contact et ainsi permettre la mesure d'un temps effectif de commutation pour permettre sa correction ultérieure en vue d'améliorer la précision de sa synchronisation avec le passage à zéro de la tension du réseau électrique 3. Selon les variantes de mise en œuvre de l'invention, il est prévu que l'étape d'étalonnage automatique de la synchronisation de la commutation affinant une synchronisation approchée basée sur des valeurs moyennes connues à la conception du sous-ensemble, soit réalisée à chaque initialisation du microcontrôleur et que la valeur de la variable résultant de cette étape soit stockée en mémoire de travail (RAM). Il est aussi prévu des variantes ou l'étape d'étalonnage est exécutée à la toute première mise sous tension et que la valeur de la variable résultant de cette étape soit stockée en mémoire non volatile (EEPROM ou FLASH par exemple) pour être rappelée en mémoire de travail après chaque initialisation du microcontrôleur 11.

La **figure 7** illustre des courbes caractéristiques en régime établi.

La figure 7 illustre l'évolution dans le temps de plusieurs tensions et actions observées à des points caractéristiques de la figure 5, ceci en régime établi alors que l'état en marche est maintenu par le relais 5. Ceci visant à permettre au microcontrôleur 11 de détecter les fermetures momentanées de l'au moins un interrupteur de mise en marche 7 après l'étape d'amorçage.

En effet, l'utilisation du même bouton pour la mise en marche initiale, mais aussi pour forcer la mise à l'arrêt en l'absence d'un évènement 9 ou pour verrouiller l'état en marche, même si un évènement 9 survient, ou encore pour commander des fonctions spécifiques de l'appareil qui comprend le sous-ensemble 1 est particulièrement avantageux.

La courbe C1 représente l'évolution dans le temps de la tension du réseau électrique 3 dans le cas d'une tension alternative. La courbe C2 représente l'évolution dans le temps de la tension au point A' relativement à la référence 0 V du point D. La courbe C3 représente la représentation logique dans le microcontrôleur 11 de l'état ouvert et fermé de l'au moins un interrupteur 7. L'au moins un interrupteur 7 est physiquement fermé entre les instant t1 et t3 ce qui se traduit dans le microcontrôleur 11 par une représentation de l'état logique correspondant entre les instants t2 et t4.

L'invention prévoit deux approches de la détection des appuis pour s'adapter aux caractéristiques techniques de la plupart des choix de mise en œuvre. Une première approche repose sur la combinaison des tensions et/ou des courants issus des sous-ensembles d'alimentation basse tension d'amorçage 10 et de maintien de l'état en marche 2. Dans l'exemple de la figure 5, la tension combinée au point A' est en tout état de cause limitée par la diode Zener 12. La valeur du condensateur 16 est déterminée à la conception du sous-ensemble selon l'invention compte tenu du courant absorbé par la charge à alimenter pour obtenir une tension d'équilibre au point A' significativement inférieure à la tension Zener de la diode 12 mais néanmoins suffisante pour maintenir les contacts du relais fermés et la tension d'alimentation du sous-ensemble 4 à un niveau suffisant lorsque seul le condensateur 16 est connecté au réseau électrique. L'augmentation de la tension combinée au point A' jusqu'à la valeur de la diode Zener 12 lorsqu'on appuie sur le bouton 7 résulte de l'apport de courant supplémentaire issu de la résistance 15. Un simple pont diviseur ramenant la tension du point A' dans la plage de travail d'un convertisseur analogique numérique, d'un comparateur analogique ou d'une entrée binaire du microcontrôleur 11 permet alors de détecter si le contact de l'au moins un interrupteur est ouvert ou fermé et d'exécuter les traitements appropriés en fonction de l'état logique de l'au moins un interrupteur 7.

L'exemple de la figure 7 illustre cette modalité de détection par la variation de tension au point A'. L'appui sur l'au moins un bouton 7 commence à l'instant t1 ce qui se manifeste par une augmentation de la tension résultant de la combinaison au point A' jusqu'au franchissement à l'instant t2 du seuil de détection. La valeur du seuil est avantageusement fixée au milieu de l'excursion en tension, c'est-à-dire entre la valeur plancher qui est la tension fournie par le sous-ensemble d'alimentation basse tension de maintien de l'état en marche 2 seule, et la valeur maximale atteinte lorsqu'on appui sur le bouton qui en pratique se trouve être la tension Zener de la diode 12. L'état logique de l'au moins un interrupteur est maintenu entre les instants t2 et t4 qui correspondent respectivement au passage au dessus et en dessous du seuil de détection.

Il est aussi prévu de détecter l'appui sur l'au moins un interrupteur par la détection d'un décalage temporel d'un passage à zéro de la tension au point A' relativement à un passage à zéro de la tension alternative du réseau électrique 3, selon que les contacts de l'au moins un interrupteur 7 sont fermés ou ouverts. Cette modalité de détection suppose l'utilisation d'un sous-ensemble d'alimentation basse tension 2 ou 10 utilisant un condensateur ou une inductance comme composant abaisseur de la tension issue du réseau électrique et que l'autre sous-ensemble d'alimentation basse tension 10 ou 2 réduise ou augmente de manière détectable le déphasage observable au point A' lorsque les deux sous-ensemble d'alimentation basse tension 2 et 10 sont simultanément en fonction, c'est-à-dire lorsque les contacts de l'au moins un interrupteur 7 sont fermés. La figure 7 illustre le cas de la combinaison d'un sous-ensemble d'alimentation basse tension de maintien d'état en marche 2 de nature capacitive et d'un sous-ensemble d'alimentation basse tension d'amorçage 10 de nature résistive tel qu'illustré par la figure 5. Lorsque les contacts de l'au moins un interrupteur 7 sont ouverts alors que le sous-ensemble d'alimentation de maintien 2 est alimenté, on observe un passage à zéro de la tension au point A' en avance relativement au passage à zéro de la tension du réseau électrique du fait de l'impédance capacitive du sous-ensemble 2. Le décalage temporel résultant entre les courbe C1 et C2 à l'instant des passages à zéro correspond aux encadrements rectangulaires. Lorsque les contacts de l'au moins un interrupteur 7 sont fermés alors que le sous-ensemble d'alimentation de maintien 2 est alimenté, on observe un passage à zéro de la tension au point A' nettement moins en avance relativement au passage à zéro de la tension du réseau électrique 3 du fait de l'influence de la résistance 15 sur le condensateur abaisseur du sous-ensemble 2 lors de la mise en parallèle résultant de l'appui sur le bouton 7. Le décalage temporel résultant entre les courbe C1 et C2 à l'instant des passages à zéro correspond aux encadrements ovales. Le microcontrôleur 11 peut aisément discriminer les deux états logiques de l'au moins un interrupteur 7, par exemple au moyen d'une temporisation lancée lors du passage à zéro de la tension au point A' et arrêtée lors du passage à zéro de la tension du réseau électrique. L'état logique de l'au moins un interrupteur résultant par exemple du résultat d'une comparaison entre la valeur de la temporisation avec un seuil prédéterminé, ou encore de l'arrivée à échéance ou non d'une temporisation de durée prédéterminée à l'instant du passage à zéro de la tension du réseau électrique 3.

La **figure 8** illustre une quatrième variante de la solution selon l'invention.

Cette variante se distingue des précédentes en ce que les sous-ensembles d'alimentation basse tension 2 et 10 mettent en œuvre un redressement double alternance 25. Ceci permet de diminuer significativement l'encombrement et le coût des composants abaisseurs de tension 15, 16 à performances équivalentes par rapport aux exemples des figures 3 et 5. En outre, cette variante de mise en œuvre de l'invention permet d'ajouter dans le boitier de commande déporté 22 un moyen de signalisation 26 tel qu'une diode led ou un buzzer que le microcontrôleur 11 peut commander en fonction de son programme d'application avec peu de moyens supplémentaires. Lesdits moyens supplémentaires sont un fil de plus 27 dans le câble de liaison 24, un moyen de signalisation 26, un agencement 28 de composants électroniques pour commander le moyen de signalisation 26 par une broche d'entrée-sortie du microcontrôleur 11.

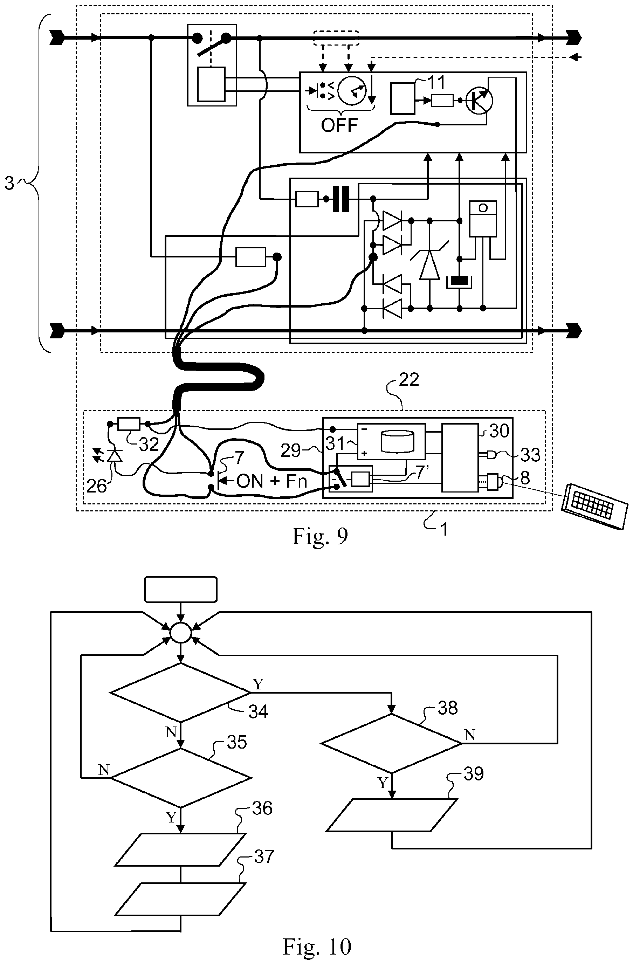

La **figure 9** illustre une cinquième variante de la solution selon l'invention.

Cette variante de mise en œuvre de l'invention se distingue de celle de la figure 8 en ce que le boitier de commande déporté 22 comprend en outre un sous-ensemble de réception de signaux de télécommande 29. Le sous-ensemble 29 comprend un récepteur de signaux physiques 8, par exemple un récepteur optoélectronique de signaux infrarouges compatible avec des boîtiers de télécommande de téléviseurs ou un récepteur de signaux radiofréquences ou de signaux vocaux. Le sous-ensemble 29 comprend en outre un circuit électronique 30 d'interprétation des signaux, par exemple un microcontrôleur et/ou un DSP de reconnaissance vocale exécutant un programme approprié. Il comprend aussi un sous-ensemble d'alimentation 31 comprenant des moyens de stockage d'énergie électrique comme par exemple un supercondensateur ou une batterie électrochimique. Le sous-ensemble d'alimentation 31 exploite l'énergie intermittente venant du boitier 23 lorsque le moyen de signalisation 26 est activé par le microcontrôleur 11.

A cette fin, tout composant électronique 32 susceptible de réduire l'amplitude de la tension fournie au sous-ensemble d'alimentation 31 est avantageusement déplacé dans le boitier de commande déporté 22 et le programme exécuté dans le microcontrôleur 11 maximise le temps d'activation du moyen de signalisation 26 lorsque le sous-ensemble 1 selon l'invention est en marche. Le sous-ensemble 29 comprend en outre un interrupteur 7' commandable par le circuit électronique 30 d'interprétation des signaux. L'interrupteur 7' est par exemple un relais électromécanique ou un relais électronique tel qu'un optocoupleur de type photo-MOS, photo-triac ou photo-thyristor monté en parallèle sur les contacts de l'au moins un interrupteur de mise en marche 7.

Lorsque le circuit électronique 30 d'interprétation des signaux a détecté un signal de télécommande approprié, il ferme momentanément les contacts de l'interrupteur 7' ce qui a pour effet de mettre en marche le sous-ensemble 1 comme le ferait la fermeture manuelle momentanée de l'interrupteur 7. Le programme exécuté par le microcontrôleur 11 et le circuit électronique 30 sont en outre avantageusement agencés pour que le temps de fermeture de l'interrupteur 7' soit suffisamment long pour garantir une mise en marche fiable du sous-ensemble 1 jusqu'au maintien effectif de l'état en marche, mais d'une durée plus courte qu'une durée de fermeture des contacts de l'au moins un interrupteur 7 susceptible d'être interprétée par le microcontrôleur 11 comme étant une commande de l'utilisateur après mise en marche, par exemple une commande de mise à l'arrêt immédiat ou une commande de mise en marche forcée permanente.

Avantageusement, le sous ensemble 29 comprend en outre un élément visuel 33, par exemple une led à très basse consommation clignotant à très basse fréquence et avec un rapport cyclique minimisant encore davantage la consommation d'énergie. L'élément visuel est piloté, par exemple par le circuit électronique 30, pour signaler lorsque le sous-ensemble 1 selon l'invention est à l'arrêt, que la réserve d'énergie comprise dans le sous-ensemble d'alimentation 31 est suffisante pour permettre à l'utilisateur une mise en marche à distance au moyen d'une télécommande compatible. Si tel n'est pas le cas, l'utilisateur sait alors immédiatement qu'il doit se rapprocher du sous-ensemble 1 selon l'invention pour le mettre en marche en fermant manuellement les contacts de l'interrupteur 7 prévu à cet effet. Ce raffinement de l'invention étant utile surtout dans le cadre d'un récepteur de télévision ou d'un coupe-veille contrôlant l'alimentation électrique d'équipements audiovisuels. Les moyens de stockage d'énergie compris dans le sous-ensemble d'alimentation 31 seront avantageusement dimensionnés pour que quelques heures de mise en marche quotidienne du sous-ensemble 1 suffisent à entretenir une autonomie permanente du sous-ensemble de réception 29 de sorte que le service rendu à l'utilisateur soit équivalent à celui qu'offrirait une solution ayant une consommation non nulle à l'arrêt.

La **figure 10** illustre la mise en œuvre du procédé selon l'invention.

La mise en œuvre du procédé se fait partiellement par un agencement approprié des moyens matériels compris dans le sous-ensemble selon l'invention et par une action de l'utilisateur sur cet agencement et par logiciel pour l'étape d'amorçage. La mise en œuvre du procédé se fait par logiciel pour les étapes de verrouillage de l'état en marche et de mise à l'arrêt automatique du sous-ensemble selon l'invention. En effet, contrairement aux sous-ensembles connus, tant que l'état fonctionnel en marche du sous-ensemble selon l'invention n'a pas été amorcé par des moyens matériels et par une action de l'utilisateur sur ces moyens, le microcontrôleur compris sous-ensemble de contrôle n'est pas alimenté et par conséquent n'est pas en mesure d'exécuter des instructions d'un logiciel. L'organigramme de la figure 10 comprend un premier test 34 exécuté continument sur l'état fonctionnel en marche du sous-ensemble selon l'invention. Si le sous-ensemble n'est pas en marche, l'activation du sous-ensemble d'alimentation électrique basse tension d'amorçage est attendue dans le cadre de l'exécution en boucle du test 35. Si une activation de l'amorçage de la mise en marche est détectée, alors les traitements 36 puis 37 sont exécutés et le test 38 de détection de la survenue d'un évènement de mise à l'arrêt est ensuite exécuté en boucle. Si une condition de mise à l'arrêt est détectée alors le traitement 39 est exécuté. Le traitement 36 représente l'étape d'amorçage de la mise en marche par activation d'un sous-ensemble d'alimentation électrique basse tension d'amorçage pour alimenter momentanément un sous-ensemble de contrôle et la commande d'un relais de puissance qu'il pilote au moins pendant le temps nécessaire au verrouillage de l'état en marche. Le traitement 37 représente l'étape de verrouillage de l'état en marche pour maintenir l'état fonctionnel en marche pendant un temps indéterminé. Le traitement 39 représente l'étape de mise à l'arrêt supprimant toute consommation électrique apparente dudit sous-ensemble électronique, et le cas échéant, aussi toutes les consommations apparentes des charges externes dont il contrôle l'alimentation, lorsque survient un évènement de mise à l'arrêt du sous-ensemble selon l'invention.

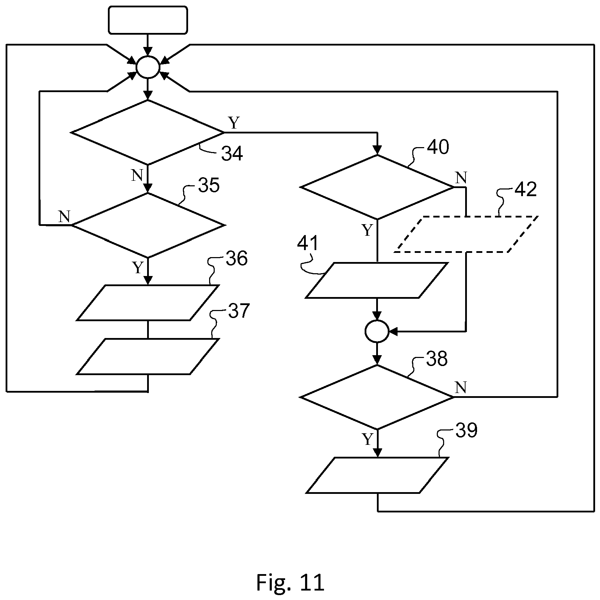

La **figure 11** illustre la mise en œuvre de raffinements du procédé.

La figure 11 se distingue de la figure 10 en ce que l'attente de la survenue d'un évènement de mise à l'arrêt, lorsque le sous-ensemble selon l'invention est en marche, est complétée par l'attente de la détection de nouvelles activations des mêmes moyens qui sont utilisés lorsque le sous ensemble est à l'arrêt pour amorcer sa mise en marche. Ce complément fonctionnel avantageux est représenté par le test 40 qui est positionné dans la boucle passant par le test 38 lorsque le sous-ensemble est en marche. Il est prévu d'exécuter le traitement 41 lorsqu'une activation de l'au moins un moyen pour activer momentanément ledit sous-ensemble d'alimentation électrique basse tension d'amorçage est détectée et, le cas échéant, le test 42 est exécuté lorsque une non activation est détectée, notamment après qu'une activation ait été préalablement détectée. En effet, certaines variantes du sous-ensemble selon l'invention ne mettent en œuvre qu'une commande de mise à l'arrêt manuelle immédiate. Dans ce cas seul le traitement 41 est nécessaire. Dans d'autres variantes de mise en œuvre plus sophistiquées de l'invention, il est nécessaire d'exécuter les traitements 41 et 42 pour par exemple compter un nombre d'appuis sur un bouton ou pour discriminer des durées d'appui sur le bouton. Il s'agit par exemple d'offrir une mise à l'arrêt sécurisée nécessitant un appui continu sur le bouton de mise en marche pendant une durée prédéterminée relativement longue pour éviter toute commande d'arrêt involontaire, pour proposer à l'utilisateur des possibilités de réglage par exemple pour activer ou désactiver une fonction de l'appareil, pour ajuster la durée d'une temporisation ou la sensibilité d'une détection.

Bien entendu, l'invention n'est pas limitée aux exemples qui viennent d'être décrits et de nombreux aménagements peuvent y être apportés sans sortir du cadre de l'invention, notamment en combinant plusieurs variantes dans la même mise en œuvre ou en combinant différemment des éléments pris dans plusieurs exemples.

## Revendications

1. Sous-ensemble électronique (1) à mise en marche commandée par l'utilisateur et à arrêt automatique, ayant une consommation électrique apparente nulle à l'arrêt et en veille et dont la mise en marche ne nécessite qu'un faible courant d'amorçage, comprenant :
- une connexion à un réseau électrique (3);
- un relais de puissance (5) comprenant au moins un interrupteur dont le premier pôle est raccordé à une phase ou à un pôle du réseau électrique, et dont le second pôle est raccordé à une entrée d'alimentation d'un sous-ensemble d'alimentation basse tension de maintien d'état en marche (2), et, le cas échéant, à une ou plusieurs charges externes (6) au sous-ensemble électronique (1);
- un sous-ensemble de contrôle (4) réalisé en logique câblée ou programmée pour au moins piloter l'état fonctionnel dudit relais de puissance (5);
- ledit sous-ensemble d'alimentation électrique basse tension de maintien d'état en marche (2) étant agencé et dimensionné pour alimenter au moins ledit sous-ensemble de contrôle (4) et la commande dudit relais de puissance (5) pendant un temps indéterminé;
ledit sous-ensemble électronique étant **caractérisé en ce qu'**il comprend en outre :
- un sous-ensemble d'alimentation électrique basse tension d'amorçage (10), qui est au moins en partie distinct du sous-ensemble d'alimentation électrique basse tension de maintien d'état en marche (2), et qui est agencé et dimensionné pour alimenter au moins momentanément ledit sous-ensemble de contrôle (4) et la commande dudit relais de puissance (5);
- au moins un moyen (7) pour activer momentanément ledit sous-ensemble d'alimentation électrique basse tension d'amorçage (10);
- au moins un moyen (15, 16, 17, 21, 43) pour limiter le courant passant par l'au moins un moyen (7);
- des moyens (20, A', 43) pour combiner des tensions et/ou des courants issus des sous-ensembles d'alimentation électrique basse tension d'amorçage (10) et de maintien d'état en marche (2);
- ledit sous-ensemble de contrôle (4) étant agencé pour fermer l'au moins un interrupteur dudit relais de puissance (5) lors de sa mise sous tension, et pour ouvrir l'au moins un interrupteur dudit relais de puissance (5) lors de la survenue d'un évènement (9) dont la nature est déterminée en fonction des caractéristiques fonctionnelles de l'appareil qui comprend ledit sous-ensemble électronique (1) et/ou, le cas échéant, selon un choix de l'utilisateur.

2. Sous-ensemble électronique selon la revendication 1 **caractérisé en ce que** l'évènement (9) dont la survenue provoque l'arrêt du sous-ensemble électronique (1) est le passage d'une quantité d'énergie, d'une puissance, d'un courant, ou d'une tension en dessous d'un seuil prédéterminé, et/ou le passage d'une quantité d'énergie, d'une puissance, d'un courant, d'une tension ou d'une autre grandeur physique au-dessus d'un seuil prédéterminé, et/ou l'atteinte d'une quantité prédéterminée d'unités consommées, et/ou la fin d'un cycle fonctionnel, et/ou l'arrivée à échéance d'une temporisation, et/ou une information ou une absence d'information issue d'un capteur, et/ou la fermeture ou l'ouverture d'un contact de sécurité, et/ou une commande manuelle d'arrêt de l'utilisateur, et/ou la réception par ledit sous-ensemble de contrôle (4) d'un signal d'arrêt transmis par des moyens externes (6) au sous-ensemble électronique (1).

3. Sous-ensemble électronique selon l'une quelconque des revendications 1 ou 2, **caractérisé en ce que** ledit sous-ensemble de contrôle (4) est agencé en outre pour fermer l'au moins un interrupteur dudit relais de puissance (5) lors de sa mise sous tension, sous condition de passage au dessus d'un seuil prédéterminé de la tension de commande du relais (5) et/ou que la fermeture effective de l'au moins un interrupteur dudit relais de puissance (5) se fasse au voisinage d'un passage à zéro de la tension alternative du réseau électrique (3).

4. Sous-ensemble électronique selon l'une quelconque des revendications 1 à 3 **caractérisé en ce que** lesdits sous-ensembles d'alimentation électrique basse tension de maintien d'état en marche (2) et d'amorçage (10) ont chacun au moins un composant électronique en commun avec l'autre (12, 13, 14, 18) et chacun au moins un composant électronique qui lui est spécifique (16, 17) et (15).

5. Sous-ensemble électronique selon l'une quelconque des revendications 1 à 4 **caractérisé en ce que** ledit sous-ensemble d'alimentation électrique basse tension de maintien d'état en marche (2) est une alimentation capacitive utilisant un condensateur (16) comme moyen pour abaisser la tension du réseau électrique, ou une alimentation utilisant un transformateur fonctionnant à la fréquence du réseau électrique pour abaisser la tension du réseau, ou une alimentation à découpage à haute fréquence (19).

6. Sous-ensemble électronique selon l'une quelconque des revendications 1 à 5 **caractérisé en ce que** le sous-ensemble d'alimentation électrique basse tension d'amorçage (10) fournit audit sous-ensemble de contrôle (4) un signal ayant au moins une transition en phase avec une alternance de la tension alternative du réseau électrique (3) pour synchroniser la fermeture de l'au moins un interrupteur dudit relais de puissance (5) avec le voisinage d'un passage à zéro de la tension alternative du réseau électrique (3).

7. Sous-ensemble électronique selon l'une quelconque des revendications 1 à 6 **caractérisé en ce que** ledit sous-ensemble d'alimentation électrique basse tension d'amorçage (10) est une alimentation résistive utilisant une résistance de puissance (15) comme moyen pour abaisser la tension du réseau électrique, ou une alimentation à découpage à haute fréquence (19).

8. Sous-ensemble électronique selon l'une quelconque des revendications 1 à 7 **caractérisé en ce que** des tensions et/ou des courants issus des sous-ensembles d'alimentation électrique basse tension d'amorçage (10) et de maintien d'état en marche (2) sont combinés pour alimenter ledit sous-ensemble de contrôle (4) et la commande dudit relais (5) lorsque seul l'un des deux sous-ensembles d'alimentation électrique basse tension (2 ou 10) est alimenté par le réseau électrique (3) et lorsque les deux sous-ensembles d'alimentation électrique basse tension (2 et 10) sont alimentés simultanément par le réseau électrique (3).

9. Sous-ensemble électronique selon la revendication 8 **caractérisé en ce que** le sous-ensemble d'alimentation électrique basse tension d'amorçage (10) fournit en outre au sous-ensemble de contrôle (4) un signal pour permettre la détection de l'activation et/ou de la non activation de l'au moins un moyen (7, 7') pour activer momentanément ledit sous-ensemble d'alimentation électrique basse tension d'amorçage, lorsque le sous-ensemble d'alimentation électrique basse tension de maintien d'état en marche (2) est alimenté par le réseau électrique (3).

10. Sous-ensemble électronique selon l'une quelconque des revendications 1 à 9 **caractérisé en ce qu'**il comprend en outre des moyens (29) pour recevoir des signaux de télécommande dont la réception provoque l'activation momentanée d'au moins un moyen (7') pour activer momentanément ledit sous-ensemble d'alimentation électrique basse tension d'amorçage du sous-ensemble électronique (1), lesdits moyens (29) pour recevoir des signaux de télécommande ayant une consommation électrique nulle sur le réseau électrique (3) lorsque ledit sous-ensemble d'alimentation électrique basse tension de maintien d'état en marche (2) n'est pas alimenté par le réseau électrique (3).

11. Sous-ensemble électronique selon la revendication 10 **caractérisé en ce qu'**un élément visuel (33) signale à l'utilisateur que la fonction de mise en marche du sous-ensemble électronique (1) par télécommande est utilisable.

12. Sous-ensemble électronique selon l'une quelconque des revendications 1 à 11 **caractérisé en ce qu'**il comprend en outre des moyens pour être mis en marche automatiquement et/ou pour être mis à l'arrêt manuellement.

13. Système formant un appareil électronique grand public ou professionnel dont la consommation électrique apparente à l'arrêt ou en veille est nulle, **caractérisé en ce qu'**il comprend un sous-ensemble électronique à mise en marche commandée par l'utilisateur et à arrêt automatique ayant une consommation électrique apparente nulle à l'arrêt et en veille selon l'une quelconque des revendications 1 à 12, et des moyens matériels et/ou logiciels additionnels pour mettre en œuvre au moins une fonction caractéristique d'un appareil électronique grand public ou professionnel.

14. Système selon la revendication 13, **caractérisé en ce que** ledit appareil électronique grand public ou professionnel est un coupe-veille universel, ou un coupe-veille optimisé pour éliminer la consommation en veille d'appareils audiovisuels ou d'appareils informatiques ou de chargeurs standards, ou un chargeur universel, ou un chargeur optimisé pour la recharge d'un ou de plusieurs appareils comprenant une batterie ou pour la recharge de pack ou de batteries amovibles, ou un appareil audiovisuel, ou un appareil de restitution sonore, ou un ordinateur, ou un sous-ensemble d'alimentation pour ordinateur de bureau ou pour ordinateur portable, ou un appareil électroménager, ou une machine, ou un outil électroportatif.

15. Procédé mis en œuvre dans un sous-ensemble électronique à mise en marche commandée par l'utilisateur et à arrêt automatique ayant une consommation électrique apparente nulle à l'arrêt et en veille selon l'une quelconque des revendications 1 à 12, ledit procédé étant **caractérisé en ce qu'**il comprend :
- une étape d'amorçage de la mise en marche (36) par activation d'un sous-ensemble d'alimentation électrique basse tension d'amorçage pour alimenter un sous-ensemble de contrôle et la commande d'un relais de puissance qu'il pilote pendant au moins le temps nécessaire au verrouillage de l'état en marche;
- une étape de verrouillage de l'état en marche (37) pour maintenir l'état fonctionnel en marche pendant un temps indéterminé, l'étape de verrouillage étant autoentretenue **en ce qu'**un sous-ensemble d'alimentation électrique basse tension de maintien d'état en marche alimente ledit sous-ensemble de contrôle et la commande dudit relais de puissance qu'il pilote pendant un temps indéterminé jusqu'à la survenue d'un évènement qui provoque l'arrêt dudit sous-ensemble électronique;
- une étape de mise à l'arrêt (39) supprimant toute consommation électrique apparente dudit sous-ensemble électronique, et le cas échéant toute consommation apparente des charges externes dont il contrôle l'alimentation, lorsque survient un évènement dont la nature est déterminée en fonction des caractéristiques fonctionnelles de l'appareil qui comprend ledit sous-ensemble électronique et/ou, le cas échéant, selon un choix de l'utilisateur.

## Patentansprüche

1. Elektronische Unterbaugruppe (1) mit benutzergesteuertem Start und automatischem Stopp, mit einer Scheinleistung gleich dem Wert Null im Aus-Zustand und im Standby-Zustand und deren Start nur einen geringen Einschaltstrom erfordert, einschließlich:
- eines Anschlusses an ein Stromnetz (3);
- eines Leistungsrelais (5) mit mindestens einem Schalter, dessen erster Pol an eine Phase oder an einen Pol des Stromnetzes angeschlossen ist, und dessen zweiter Pol an einen Netzeingang einer Niederspannungsversorgungseinheit für die Aufrechterhaltung des Betriebszustandes (2) und gegebenenfalls an eine oder mehrere externe Lasten (6) der elektronischen Unterbaugruppe (1) angeschlossen ist;
- einer Controller-Einheit (4), die in festverdrahteter Logik oder programmierbarer Logik ausgeführt ist, um zumindest den Funktionszustand des genannten Leistungsrelais (5) zu steuern;
- die genannte Niederspannungsversorgungseinheit für die Aufrechterhaltung des Betriebszustandes (2) ist so ausgelegt und bemessen, dass sie zumindest die genannte Controller-Einheit (4) und das genannte Leistungsrelais (5) für eine unbestimmte Zeit mit Strom versorgt;
die genannte elektronische Unterbaugruppe ist **dadurch gekennzeichnet, dass** sie des Weiteren Folgendes umfasst:
- eine Niederspannungsversorgungseinheit für die Einschaltung (10), die zumindest teilweise von der Niederspannungsversorgungseinheit für die Aufrechterhaltung des Betriebszustandes (2) getrennt ist und die so ausgelegt und bemessen ist, um mindestens vorübergehend die genannte Controller-Einheit (4) und die Steuerung des genannten Leistungsrelais mit Strom zu versorgen (5);
- zumindest ein Mittel(7), um vorübergehend die genannte Niederspannungsversorgungseinheit für die Einschaltung (10) zu aktiveren;
- zumindest ein Mittel (15, 16, 17, 21, 43), um den Strom zu begrenzen, der durch das zumindest eine Mittel (7) fließt;
- Mittel (20, A', 43), um Spannungen und/oder Ströme der Niederspannungsversorgungseinheit für die Einschaltung (10) und für die Aufrechterhaltung des Betriebszustandes (2) zusammenzuführen;
- die genannten Controller-Einheit (4) ist ausgelegt, um den zumindest einen Schalter des genannten Leistungsrelais (5) bei seinem Einschalten zu schließen und um den zumindest einen Schalter des genannten Leistungsrelais (5) bei Auftreten eines Ereignisses (9) zu schließen, dessen Natur gemäß den Funktionsmerkmalen des Geräts mit der genannten elektronischen Unterbaugruppe (1) und/oder gegebenenfalls gemäß einer Wahl des Nutzers festgelegt wird.

2. Elektronische Unterbaugruppe nach Anspruch 1, die **dadurch gekennzeichnet ist, dass** das Ereignis (9), dessen Auftreten zum Stopp der elektronischen Unterbaugruppe (1) führt, den Durchgang einer Strommenge, einer Leistung, eines Stroms oder einer Spannung unterhalb eines vorbestimmten Schwellenwerts und/oder den Durchgang einer Strommenge, einer Leistung, eines Stroms, einer Spannung oder einer anderen physikalischen Größe oberhalb eines vorbestimmten Schwellenwerts und/oder das Erreichen einer vorbestimmten Menge an verbrauchten Einheiten und/oder das Ende eines Betriebszyklus und/oder den Ablauf einer Verzögerung und/oder eine Information oder das Fehlen einer Information von einem Sensor und/oder das Schließen oder das Öffnen eines Sicherheitskontakts und/oder einen manuellen Stoppbefehl seitens des Nutzers und/oder den Empfang von der genannten Controller-Einheit (4) eines Stoppsignal, das von externen Mitteln (6) an die elektronische Unterbaugruppe (1) übermittelt wird, darstellt.

3. Elektronische Unterbaugruppe nach einem der Ansprüche 1 oder 2, die **dadurch gekennzeichnet ist, dass** die genannte Controller-Einheit (4) des Weiteren dafür ausgelegt ist, den zumindest einen Schalter des genannten Leistungsrelais (5) bei seinem Einschalten zu schließen unter der Bedingung des Durchgangs über einem vorbestimmten Schwellenwert der Steuerspannung des Relais (5) und/oder dass das effektive Schließen des zumindest einen Schalters des genannten Leistungsrelais (5) in der Nähe eines Nulldurchgangs der Wechselspannung des Stromnetzes (3) erfolgt.

4. Elektronische Unterbaugruppe nach einem der Ansprüche 1 bis 3, die **dadurch gekennzeichnet ist, dass** die genannten Niederspannungsversorgungseinheiten für die Aufrechterhaltung des Betriebszustandes (2) und die Einschaltung (10) jede mindestens ein Elektronikbauteil mit der anderen (12, 13, 14, 18) gemeinsam hat und jede mindestens ein ihr spezifisches Elektronikbauteil (16, 17) und (15) hat.

5. Elektronische Unterbaugruppe nach einem der Ansprüche 1 bis 4, die **dadurch gekennzeichnet ist, dass** die genannte Niederspannungsversorgungseinheit für die Aufrechterhaltung des Betriebszustandes (2) ein Kondensatornetzteil ist, das einen Kondensator (16) als Mittel benutzt, um die Spannung des Stromnetzes zu verringern oder eine Stromversorgung, die einen Transformator verwendet, der mit der Frequenz des Stromnetzes arbeitet, um die Spannung zu verringern, oder ein Hochfrequenz-Schaltnetzteil (19).

6. Elektronische Unterbaugruppe nach einem der Ansprüche 1 bis 5, die **dadurch gekennzeichnet ist, dass** die Niederspannungsversorgungseinheit für die Einschaltung (10) der genannten Controller-Einheit (4) ein Signal mit zumindest einem Übergang im Einklang mit einer Halbperiode der Wechselspannung des Stromnetzes (3) bereitstellt, um das Schließen des zumindest einen Schalters des genannten Leistungsschalters (5) mit der Nähe eines Nulldurchgangs der Wechselspannung des Stromnetzes (3) zu synchronisieren.

7. Elektronische Unterbaugruppe nach einem der Ansprüche 1 bis 6, die **dadurch gekennzeichnet ist, dass** die genannte Niederspannungsversorgungseinheit für die Einschaltung (10) ein Widerstandsnetzteil ist, das einen Leistungswiderstand (15) als Mittel verwendet, um die Spannung des Stromnetzes zu verringern oder ein Hochfrequenz-Schaltnetzteil (19).

8. Elektronische Unterbaugruppe nach einem der Ansprüche 1 bis 7, die **dadurch gekennzeichnet ist, dass** die Spannungen und/oder Ströme der Niederspannungsversorgungseinheiten für die Einschaltung (10) und für die Aufrechterhaltung des Betriebszustandes (2) zusammengeführt werden, um die genannte Controller-Einheit (4) und die Steuerung des genannten Relais (5) mit Strom zu versorgen, wenn nur eine der beiden Niederspannungsversorgungseinheiten (2 oder 10) vom Stromnetz (3) versorgt wird und wenn die beiden Niederspannungsversorgungseinheiten (2 und 10) gleichzeitig vom Stromnetz (3) versorgt werden.

9. Elektronische Unterbaugruppe nach Anspruch 8, die **dadurch gekennzeichnet ist, dass** die Niederspannungsversorgungseinheit für die Einschaltung (10) der Controller-Einheit (4) des Weiteren ein Signal bereitstellt, um das Erkennen der Aktivierung und/oder Nicht-Aktivierung des zumindest einen Mittels (7, 7') zu ermöglichen, um vorübergehend die genannte Niederspannungsversorgungseinheit für die Einschaltung zu aktivieren, wenn die Niederspannungsversorgungseinheit für die Aufrechterhaltung des Betriebszustandes (2) vom Stromnetz (3) versorgt wird.

10. Elektronische Unterbaugruppe nach einem der Ansprüche 1 bis 9, die **dadurch gekennzeichnet ist, dass** sie des Weiteren Mittel (29) umfasst, um Fernbedienungssignale zu empfangen, deren Empfang die vorübergehende Aktivierung des zumindest einen Mittels (7') auslöst, um vorübergehend die genannte Niederspannungsversorgungseinheit für die Einschaltung der elektronischen Unterbaugruppe (1), die genannten Mittel(29), um Fernbedienungssignale zu empfangen, die keinen Stromverbrauch im Stromnetz (3) haben, zu aktivieren, wenn die genannte Niederspannungsversorgungseinheit für die Aufrechterhaltung des Betriebszustandes (2) nicht vom Stromnetz (3) versorgt wird.

11. Elektronische Unterbaugruppe nach Anspruch 10, die **dadurch gekennzeichnet ist, dass** ein optisches Element (33) dem Benutzer anzeigt, dass die Einschaltfunktion der elektronischen Unterbaugruppe (1) per Fernbedienung verwendet werden kann.

12. Elektronische Unterbaugruppe nach einem der Ansprüche 1 bis 11, die **dadurch gekennzeichnet ist, dass** sie des Weiteren Mittel umfasst, um automatisch eingeschaltet und/oder manuell ausgeschaltet zu werden.

13. System, das ein elektronisches Gerät für die private oder professionelle Nutzung bildet, mit einer Scheinleistung gleich dem Wert Null im Aus-Zustand und im Standby-Zustand, das **dadurch gekennzeichnet ist, dass** es eine elektronische Unterbaugruppe mit benutzergesteuertem Start und automatischem Stopp umfasst mit einer Scheinleistung gleich dem Wert Null im Aus-Zustand und im Standby-Zustand nach einem der Ansprüche 1 bis 12, und zusätzliche Hardware- und/oder Software-Mittel, um zumindest eine charakteristische Funktion eines elektronischen Geräts für die private oder professionelle Nutzung auszuführen.

14. System nach Anspruch 13, das **dadurch gekennzeichnet ist, dass** das genannte elektronische Gerät für die private oder professionelle Nutzung eine Universal-Energiespareinrichtung oder eine optimierte Energiespareinrichtung ist, um den Verbrauch im Standby-Zustand von audiovisuellen Geräten oder IT-Geräten oder Standard-Ladegeräten zu senken, oder ein Universal-Ladegerät oder ein optimiertes Ladegerät zum Laden eines oder mehrerer Geräte mit Batterie oder zum Laden von herausnehmbaren Akkupacks oder ein audiovisuelles Gerät oder ein Gerät für die Tonwiedergabe oder ein Computer oder eine Stromversorgungseinheit für Desktop- oder Notebook-Computer oder ein Haushaltsgerät oder eine Maschine oder ein tragbares Elektrowerkzeug.

15. Verfahren, das in einer elektronischen Unterbaugruppe mit benutzergesteuertem Start und automatischem Stopp, mit einer Scheinleistung gleich dem Wert Null im Aus-Zustand und im Standby-Zustand nach einem der Ansprüche 1 bis 12 eingesetzt wird, wobei das genannte Verfahren **dadurch gekennzeichnet ist, dass** es des Weiteren Folgendes umfasst:
- eine Einschaltphase für das Einschalten (36) durch Aktivierung einer Niederspannungsversorgungseinheit für die Einschaltung, um eine Controller-Einheit und die Steuerung eines Leistungsrelais zu versorgen, die sie zumindest für die erforderliche Zeit der Verriegelung des eingeschalteten Zustands steuert;
- eine Verriegelungsphase des eingeschalteten Zustands (37), um den Funktionszustand für einen unbestimmten Zeitraum aufrechtzuerhalten, wobei sich die Verriegelungsphase selbst erhält dadurch, dass eine Niederspannungsversorgungseinheit für die Aufrechterhaltung des Betriebszustandes die genannte Controller-Einheit und die Steuerung des genannten Leistungsrelais mit Strom versorgt, die sie für eine unbestimmte Zeit bis zum Auftreten eines Ereignisses steuert, das den Stopp der genannten elektronischen Unterbaugruppe bewirkt;
- eine Ausschaltphase (39), die jede elektrische Scheinleistung der genannten elektronischen Unterbaugruppe ausschaltet, und gegebenenfalls jede Scheinleistung der externen Lasten, deren Stromversorgung sie überwacht, wenn ein Ereignis auftritt, dessen Natur gemäß den Funktionsmerkmalen des Geräts mit der genannten elektronischen Unterbaugruppe und/oder gegebenenfalls gemäß einer Wahl des Nutzers festgelegt wird.

## Claims

1. Electronic subassembly (1) with user-controlled start-up, and automatic stop, having zero apparent power consumption when turned off and in standby and whose start-up requires only a low priming current, comprising:
- a connection to an electrical network (3);
- a power relay (5) comprising at least one switch, the first pole of which is connected to a phase or a pole of the electrical network, and the second pole of which is connected to a power input of a low voltage power supply for maintaining the operating state (2), and, where relevant, to one or more loads (6) external to the electronic subassembly (1);
- a control subassembly (4) made of wired or programmed logic for at least controlling the functional state of said power relay (5);
- said low-voltage power supply for maintaining operating state (2) being arranged and dimensioned to supply at least said control subassembly (4) and the control of said power relay (5) during an indefinite time;
said electronic subassembly being **characterized in that** it further comprises:
- a low voltage priming power supply subassembly (10), which is at least partially distinct from the low voltage power supply for maintaining the operating state (2), and which is arranged and dimensioned to supply at least momentarily said control subassembly (4) and the control of said power relay (5);
- at least one means (7) for momentarily activating said priming low voltage electrical supply subassembly (10);
- at least one means (15, 16, 17, 21, 43) for limiting the current passing through the at least one means (7);
- means (20, A', 43) for combining voltages and/or currents originating from the low voltage priming (10) and for maintaining the operating state (2) power supply sub-assemblies;
- said control subassembly (4) being arranged to close the at least one switch of said power relay (5) when it is powered on, and to open the at least one switch of said power relay (5) upon the occurrence of an event (9) the nature of which is determined as a function of the functional characteristics of the device which comprises said electronic subassembly (1) and/or, where relevant, according to a choice of the user.

2. Electronic subassembly according to claim 1 **characterized in that** the event (9) whose occurrence causes the electronic subassembly (1) to turn off is the passage of an amount of energy, of a power, of a current, or of a voltage below a predetermined threshold, and/or the passage of a quantity of energy, of a power, of a current, of a voltage or another quantity physical above a predetermined threshold, and/or reaching a predetermined quantity of units consumed, and/or the end of a functional cycle, and/or the expiration of a time delay, and/or an information or an absence of information from a sensor, and/or the closing or opening of a safety contact, and/or a shutdown manual command from the user, and/or reception by said control subassembly (4) of a stop signal transmitted by external means (6) to the subassembly electronic (1).

3. Electronic subassembly according to any one of claims 1 or 2, **characterized in that** said control subassembly (4) is further arranged to close the at least one switch of said power relay (5) during its power on, under the condition of passing above a predetermined threshold of the relay control voltage (5) and/or that the effective closing of the at least one switch of said power relay (5) takes place in the vicinity a zero crossing of the AC mains voltage (3).

4. Electronic subassembly according to any one of Claims 1 to 3, **characterized in that** the said low-voltage electrical power supply for maintaining operating state (2) and for priming (10) each have at least one electronic component in common with the other (12, 13, 14, 18) and each at least one specific electronic component (16, 17) and (15).

5. Electronic subassembly according to any one of Claims 1 to 4, **characterized in that** said low-voltage power supply for maintaining operating state (2) is a capacitive supply using a capacitor (16) as means for lowering the voltage of the electrical network, or a power supply using a transformer operating at the frequency of the electrical network to lower the voltage of the network, or a high frequency switching power supply (19).

6. Electronic subassembly according to any one of Claims 1 to 5, **characterized in that** the low-voltage priming power supply subassembly (10) supplies said control subassembly (4) with a signal having at least one transition in phase with alternating voltage of the electrical network (3) to synchronize the closing of the at least one switch of said power relay (5) with the vicinity of a zero crossing of the alternating voltage of the electrical network (3).

7. Electronic subassembly according to any one of claims 1 to 6 **characterized in that** said low-voltage priming power supply subassembly (10) is a resistive power supply using a power resistor (15) as a means for lowering the mains voltage, or a high frequency switching power supply (19).

8. Electronic subassembly according to any one of Claims 1 to 7, **characterized in that** voltages and/or currents originating from the low-voltage priming power supply sub-assemblies (10) and for maintaining the operating state (2) are combined to supply said control subassembly (4) and control of said relay (5) when only one of the two low-voltage electrical supply sub-assemblies (2 or 10) is supplied by the network electrical (3) and when the two low voltage electrical power supply sub-assemblies (2 and 10) are supplied simultaneously by the electrical network (3).

9. Electronic subassembly according to claim 8 **characterized in that** the low-voltage priming power supply subassembly (10) also supplies the control subassembly (4) with a signal to enable detection of the activation and/or the non-activation of the at least one means (7, 7') for momentarily activating said priming low voltage power supply subassembly, when the low-voltage power supply subassembly for holding operating state (2) is supplied by the electrical network (3).

10. Electronic subassembly according to any one of Claims 1 to 9, **characterized in that** it also comprises means (29) for receiving remote control signals, the reception of which causes the momentary activation of at least one means (7') for momentarily activating said low-voltage electrical power supply starting subassembly of the electronic subassembly (1), said means (29) for receiving remote control signals having zero electrical consumption on the electrical network (3) when said low-voltage power supply for maintaining operating state (2) is not supplied by the electrical network (3).

11. Electronic subassembly according to claim 10 **characterized in that** a visual element (33) signals to the user that the function of switching on the electronic subassembly (1) by remote control is usable.

12. Electronic subassembly according to any one of claims 1 to 11 **characterized in that** it further comprises means for being switched on automatically and/or for being turned off manually.

13. System forming a consumer or professional electronic device whose apparent electrical consumption when turned off or in standby is zero, **characterized in that** it comprises an electronic subassembly with user-controlled start-up, and automatic stop having zero apparent power consumption when turned off and in standby according to any one of claims 1 to 12, and additional hardware and/or software means for implementing at least one characteristic function of a consumer or professional electronic device.

14. System according to claim 13, **characterized in that** said consumer or professional electronic device is a universal standby switch, or a standby switch optimized to eliminate the standby consumption of audio-visual devices or computer devices or standard chargers, or a universal charger, or a charger optimized for recharging one or more devices comprising a battery or for recharging pack or removable batteries, or an audio-visual device, or a sound reproduction device, or a computer, or a power supply subassembly for a desktop or laptop computer, or a household appliance, or a machine, or a power tool.

15. Method implemented in an electronic subassembly with user-controlled start-up, and automatic stop having zero apparent power consumption when turned off and in standby according to any one of claims 1 to 12, said method being **characterized in that** it comprises:
- a start-up step (36) by activating a low-voltage priming electrical power supply subassembly to supply a control subassembly and the command of a power relay which it pilot for at least the time necessary to lock the started-up state;
- a step for locking the started-up state (37) to keep the functional state running for an indefinite time, the locking step being self-sustaining **in that** a low-voltage power supply for maintaining operating state supplies said control subassembly and the command of said power relay which it controls for an indefinite time until the occurrence of an event which causes said electronic subassembly to turn off;
- a shutdown step (39) eliminating any apparent electrical consumption of said electronic subassembly, and if necessary any apparent consumption of the external loads whose power it controls, when an event occurs whose nature is determined according to functional characteristics of the device which comprises said electronic subassembly and/or, where appropriate, according to a choice of the user.
